(19) Europäisches Patentamt
European Patent Office
Office européen des brevets

(11) **EP 3 040 365 B1**

(12) **EUROPEAN PATENT SPECIFICATION**

(45) Date of publication and mention of the grant of the patent:
**01.03.2017 Bulletin 2017/09**

(21) Application number: **14839241.8**

(22) Date of filing: **27.08.2014**

(51) Int Cl.:
***C08J 5/22*** (2006.01) ***C08F 212/14*** (2006.01)
***C08F 212/34*** (2006.01) ***C08F 220/20*** (2006.01)
***C08F 220/34*** (2006.01) ***C08F 220/54*** (2006.01)

(86) International application number:
**PCT/JP2014/072472**

(87) International publication number:
**WO 2015/030070 (05.03.2015 Gazette 2015/09)**

(54) **ION EXCHANGE FILM, COMPOSITION FOR FORMING ION EXCHANGE FILM, AND PRODUCTION METHOD FOR ION EXCHANGE FILM**

IONENAUSTAUSCHFILM, ZUSAMMENSETZUNG ZUR BILDUNG DES IONENAUSTAUSCHFILMS UND HERSTELLUNGSVERFAHREN FÜR DEN IONENAUSTAUSCHFILM

FILM D’ÉCHANGE D’IONS, COMPOSITION POUR FORMER UN FILM D’ÉCHANGE D’IONS ET PROCÉDÉ DE PRODUCTION POUR FILM D’ÉCHANGE D’IONS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.08.2013 JP 2013179801**

(43) Date of publication of application:
**06.07.2016 Bulletin 2016/27**

(73) Proprietor: **Fujifilm Corporation**
**Minato-ku**
**Tokyo 106-8620 (JP)**

(72) Inventors:
- **SANO, Satoshi**
  **Ashigarakami-gun**
  **Kanagawa 258-8577 (JP)**
- **KODAMA, Keisuke**
  **Ashigarakami-gun**
  **Kanagawa 258-8577 (JP)**
- **INOUE, Kazuomi**
  **Ashigarakami-gun**
  **Kanagawa 258-8577 (JP)**

(74) Representative: **Hoffmann Eitle**
**Patent- und Rechtsanwälte PartmbB**
**Arabellastraße 30**
**81925 München (DE)**

(56) References cited:
**EP-A1- 2 902 097**
**WO-A1-2012/087770**
**WO-A1-2012/087770**
**WO-A1-2013/155608**
**WO-A1-2014/050992**
**JP-A- H04 315 042**
**JP-A- H04 315 042**
**JP-A- H10 279 713**
**JP-A- H10 279 713**
**JP-A- 2002 035 607**
**JP-A- 2002 035 607**
**JP-A- 2002 114 854**
**JP-A- 2002 114 854**
**JP-A- 2009 215 500**
**JP-A- 2009 215 500**
**JP-A- 2013 149 462**
**JP-A- 2013 149 462**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 3 040 365 B1

## Description

## BACKGROUND OF THE INVENTION

1. Field of the Invention

The invention relates to an ion exchange film, a composition for forming an ion exchange film, and a production method for an ion exchange film.

2. Description of the Related Art

The ion exchange film is used in electrodeionization (EDI), continuous electrodeionization (CEDI), electrodialysis (ED), electrodialysis reversal (EDR), reverse electrodialysis (RED), and the like.

The electrodeionization (EDI) is a water treatment process for removing ions from aqueous liquids by using an ion exchange film and an electrical potential in order to achieve ion transport. EDI differs from other water purification technologies, such as conventional ion exchange, in that it is does not require the use of chemicals such as acids or caustic soda, and can be used to produce ultra pure water. The electrodialysis (ED) and the electrodialysis reversal (EDR) are electrochemical separation processes for removing ions and the like from water and other fluids.

The ion exchange film has been researched in various ways, and, for example, an anion exchanging film using a styrene-divinylbenzene copolymer as a crosslinking polymer in order to improve heat resistance, chemical stability, and exchange capacity (see JP2000-212306A) and the like are suggested. In order to improve self-supporting characteristics or flexibility in addition to the improvement of the ion exchange capacity, a method of polymerizing a monomer having a quaternary base due to radical polymerization in an amphipathic field having bimolecular film forming properties and 3 or more radically polymerizable groups (see JP1994-073206A (JP-H06-073206A)), and the like are suggested. In addition, a curing composition in which a content of a monomer having a crosslinking agent having 2 acrylamide groups and an ethylenically unsaturated group having a cationic group is regulated in order to improve the preservation stability of the ion exchange film and decrease electric resistance (see WO2013/011273A and WO2011/073638A) is suggested.

In addition, a polymer resin made of a vinyl crosslinking agent and an aromatic monomer having a quaternary ammonium group and having two or more ring structures has been researched as an antibody refining film for separating an unnecessary compound (for example, a host cell protein, an aggregated antibody, and a virus) from a biological sample containing an antibody (see JP2013-513623A). The polymer resin is different from the ion exchange film in required roles and functions.

## SUMMARY OF THE INVENTION

The anion exchanging film disclosed in JP2000-212306A is a styrene-divinylbenzene copolymer and is produced by introducing a quaternary amino group into an obtained polymer after polymerization reaction with a nucleophilic substitution reaction of a tertiary amine. This polymerization curing reaction is polymerization curing caused by heat, and requires reaction for a long period of time in order to obtain a film having a high curing degree. In addition, since quaternary amination is performed after polymerization, the film is hardly dissolved in a hydrophilic solvent such as water, the quaternary amination reaction hardly progresses to the inside of the polymer, and thus quaternary amination becomes uneven. Therefore, if the curing degree of the polymer is decreased in order to cause the quaternary amination to progress to the inside of the polymer, a charge density in the film (density of quaternary amino group) decreases, and film strength decreases. Further, the ion exchange film has low affinity to water, and thus electric resistance of the film has to increase.

JP1994-073206A (JP-H06-073206A) discloses an ion exchange film obtained by homopolymerizing a monomer having 3 or more ethylenically unsaturated groups and a quaternary ammonium group, that is, a crosslinking monomer, and the obtained film has self-supporting characteristics, but it is difficult to adjust physical properties of the obtained ion exchange film. Also, the polymerization curing reaction is polymerization curing which is performed by using a reaction field of a bimolecular film formed with an amphipathic surfactant. Therefore, photopolymerization is performed, but variation in performances easily occurs due to the difference in homogeneity of a crosslinking film, and thus the film has many defects.

The ion exchange film suggested in WO2013/011273A and WO2011/073638A is improved in view of permselective properties (transportation rate) and pH resistance, but requires further improvement as a polymer functional film, and thus, in addition to these, improvement in characteristics of polymer functional film is also required.

In the research of the present inventors, it has been found that in the polymer functional film using a styrene-based monomer, it is possible to considerably increase the function as an ion exchange film by further decreasing electric

resistance of the film (hereinafter, referred to as "film resistance"). Further, the present inventors have found that if both of a monomer having high water solubility and a crosslinking agent having high water solubility are combined, the monomers can be dissolved with a high concentration, and thus it is possible to prepare a coating liquid that maintains high concentration and that is even. The present inventors have further researched monomer species using this as a clue and found that it is possible to provide a high-performance ion exchange film having low film resistance, fewer film defects, and excellent mechanical strength.

Accordingly, an object of the invention is to provide an ion exchange film (hereinafter, simply referred to as a film) in which film resistance is suppressed to be low, a composition for forming an ion exchange film, and a production method for an ion exchange film.

In addition, an object of the invention is to provide an ion exchange film as an anion exchanging film which has low water content and water permeability, has suppressed generation of a pin hole, and thus can be used in usages in a wide range, a composition for forming the ion exchange film, and a production method for the ion exchange film in which such an excellent polymer functional film can be produced in an extremely short period of time.

In view of these problems, the present inventors diligently studied a film structure appropriate for the polymer functional film and have found the possibility in that a high-performance ion exchange film having low film resistance, fewer film defects, and excellent mechanical strength are provided as described above. Particularly, with respect to the copolymer of a compound (monomer) having a styrene skeleton and an acrylic compound (monomer), in addition to causing both of the monomers to have a structure of high water solubility, by causing these monomers to have a specific combination of the crosslinking monomer and a monofunctional monomer (a monomer having one ethylenically unsaturated group), the photopolymerization curing reaction in a high concentration becomes possible. Therefore, charge density in the film is increased and also an even film can be formed in a short period of time. Accordingly, the present inventors have found that the electric resistance is extremely low when the film is used as an ion exchange film. Further, the present inventors have found that satisfactorily low water permeability is exhibited when the film is used as the ion exchange film. The invention has been conceived in view of these.

That is, the problems of the invention have been solved by the following means.

(1) An ion exchange film including: at least one type of porous supports; and a polymer resin disposed in pores of the porous support, in which the polymer resin contains a styrene-acryl copolymer having a structure expressed by at least one of General Formulae (PI) and (PII) below,

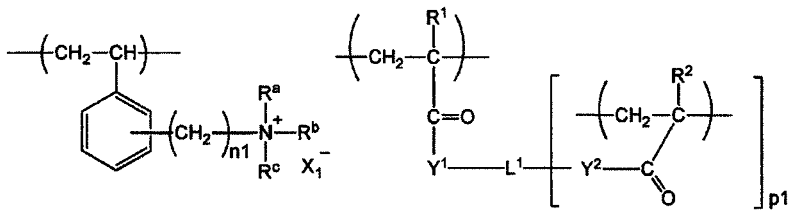

General Formula (PI)

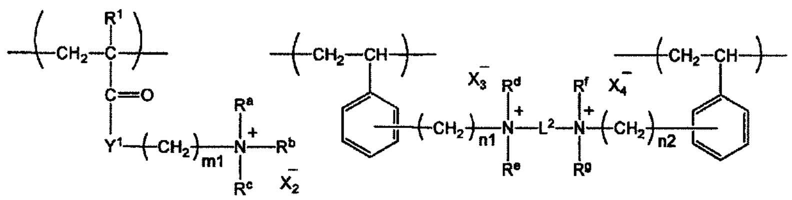

General Formula (PII)

in General Formulae (PI) and (PII), each of $R^1$ and $R^2$ independently represents a hydrogen atom or an alkyl group, each of $Y^1$ and $Y^2$ independently represents -O- or -N(Rx)-, here, Rx represents a hydrogen atom or an alkyl group, $L^1$ represents a p1 + 1-valent linking group having 2 or more carbon atoms, $L^2$ represents a bivalent linking group, p1 represents an integer of 1 or greater, each of n1, n2, and m1 independently represents an integer of 1 or greater, each of $R^a$ to $R^g$ independently represents an alkyl group or an aryl group, 2 or 3 of $R^a$ to $R^c$ may be bonded to each other to form a ring, 2 to 4 of $R^d$ to $R^g$ may be bonded to each other to form a ring, and each of $X_1^-$ to $X_4^-$ independently represents an organic or inorganic anion.

(2) The ion exchange film according to (1), in which the polymer is made of a monomer component expressed by

General Formula (MI-a) below and a crosslinking monomer component expressed by General Formula (MI-b) below or made of a monomer component expressed by General Formula (MII-a) below and a crosslinking monomer component expressed by General Formula (MII-b) below,

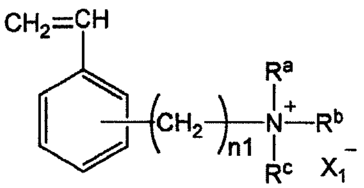

General Formula (MI-a)

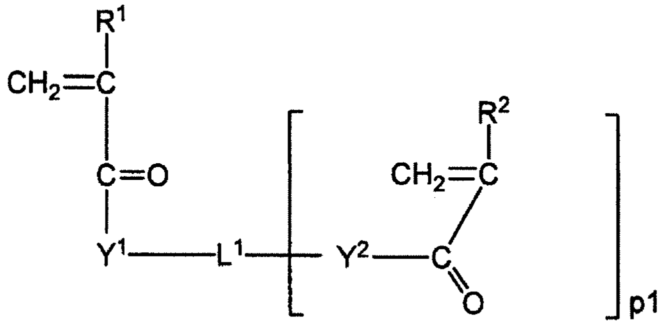

General Formula (MI-b)

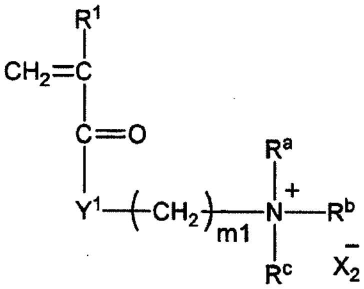

General Formula (MII-a)

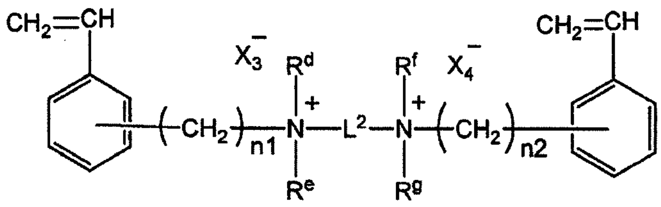

General Formula (MII-b)

in General Formulae (MI-a), (MI-b), (MII-a), and (MII-b), $R^1$, $R^2$, $Y^1$, $Y^2$, $L^1$, $L^2$, p1, n1, n2, m1, $R^a$ to $R^g$, and $X_1^-$ to $X_4^-$ have the same meaning as $R^1$, $R^2$, $Y^1$, $Y^2$, $L^1$, $L^2$, p1, n1, n2, m1, $R^a$ to $R^g$, and $X_1^-$ to $X_4^-$ in General Formulae (PI) and (PII), respectively.

(3) The ion exchange film according to (1) or (2), in which a content of a component having a structure unit obtained from a styrene skeleton or having a styrene skeleton is 1 part by mass to 85 parts by mass in the case of General Formula (PI) and 10 parts by mass to 90 parts by mass in the case of General Formula (PII) with respect to 100 parts by mass of the polymer.

(4) The ion exchange film according to any one of (1) to (3), in which the polymer is crosslinked and cured by photoradical polymerization.

(5) The ion exchange film according to any one of (1) to (4), in which the porous support is a synthetic woven fabric, a synthetic nonwoven fabric, a sponge-shaped film, or a film having fine through holes.

(6) The ion exchange film according to any one of (1) to (5), in which the porous support is polyolefin.

(7) The ion exchange film according to any one of (1) to (6), in which a film thickness of the polymer resin is 40 μm to 500 μm.

(8) A composition for forming an ion exchange film including: a compound expressed by General Formula (MI-a) below and a compound expressed by General Formula (MI-b) below; or a compound expressed by General Formula (MII-a) below and a compound expressed by General Formula (MII-b) below,

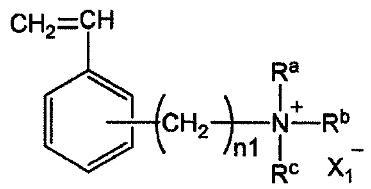

General Formula (MI-a)

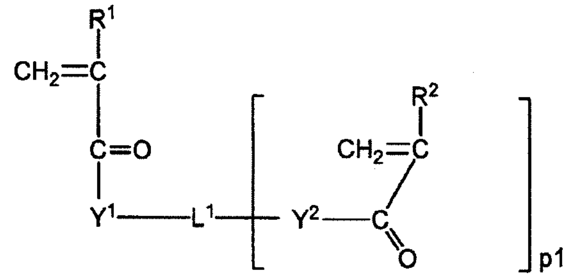

General Formula (MI-b)

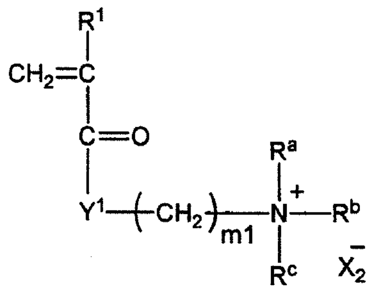

General Formula (MII-a)

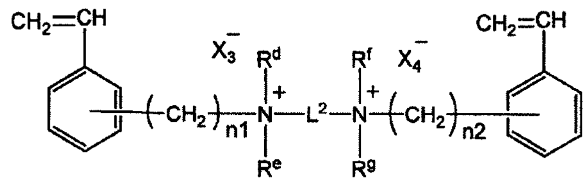

General Formula (MII-b)

in General Formulae (MI-a), (MI-b), (MII-a), and (MII-b), each of $R^1$ and $R^2$ independently represents a hydrogen atom or an alkyl group, each of $Y^1$ and $Y^2$ independently represents -O- or -N(Rx)-, here, Rx represents a hydrogen atom or an alkyl group, $L^1$ represents a p1 + 1-valent linking group having 2 or more carbon atoms, $L^2$ represents a bivalent linking group, p1 represents an integer of 1 or greater, each of n1, n2, and m1 independently represents an integer of 1 or greater, each of $R^a$ to $R^g$ independently represents an alkyl group or an aryl group, 2 or 3 of $R^a$ to $R^c$ may bonded to each other to form a ring, 2 to 4 of $R^d$ to $R^g$ may bonded to each other to form a ring, and each of $X_1^-$ to $X_4^-$ independently represents an organic or inorganic anion.

(9) The composition for forming an ion exchange film according to (8), in which a content of the compound having the styrene skeleton is 1 part by mass to 85 parts by mass in the case of the compound expressed by General Formula (MI-a) and 10 parts by mass to 90 parts by mass in the case of the compound expressed by General Formula (MII-a) with respect to 100 parts by mass of the total solid content of the composition.

(10) The composition for forming an ion exchange film according to (8) or (9), in which solubility of all the compounds having the ethylenically unsaturated groups is 30% by mass or more with respect to pure water at 25°C.

(11) The composition for forming an ion exchange film according to any one of (8) to (10), further including: a photopolymerization initiator expressed by General Formula (PPI-1) or (PPI-2) below,

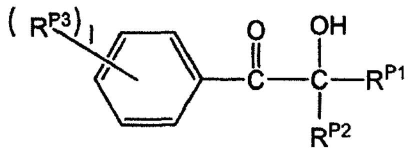

General Formula (PPI-1)

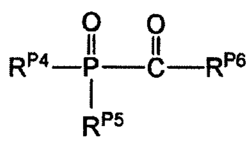

General Formula (PPI-2)

in General Formulae (PPI-1) and (PPI-2), each of $R^{P1}$ and $R^{P2}$ independently represents a hydrogen atom, an alkyl group, an alkoxy group, or an aryloxy group, $R^{P3}$ represents an alkyl group, an alkoxy group, or an aryloxy group, 1 represents an integer of 0 to 5, $R^{P4}$ represents an alkyl group, an aryl group, an alkylthio group, or an arylthio group, $R^{P5}$ represents an alkyl group, an aryl group, an alkylthio group, an arylthio group, or an acyl group, $R^{P6}$ represents an alkyl group or an aryl group, and $R^{P1}$ and $R^{P2}$ or $R^{P4}$ and $R^{P5}$ may be bonded to each other to form a ring.

(12) The composition for forming an ion exchange film according to (11), in which a content of the photopolymerization initiator is 0.1 parts by mass to 20 parts by mass with respect to 100 parts by mass of the total solid content of the

composition.

(13) The composition for forming an ion exchange film according to (11) or (12), further including: a radical polymerization initiator expressed by General Formula (AZI) below,

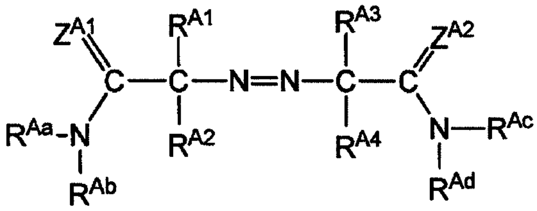

General Formula (AZI)

in General Formula (AZI), each of $Z^{A1}$ and $Z^{A2}$ independently represents =O or N-$R^{Ae}$, each of $R^{A1}$ to $R^{A4}$ independently represents an alkyl group, each of $R^{Aa}$ to $R^{Ae}$ independently represents a hydrogen atom or an alkyl group, and at least 2 of $R^{Aa}$, $R^{Ab}$, and $R^{Ae}$, at least 2 of $R^{Ac}$, $R^{Ad}$, and $R^{Ae}$, and/or at least 2 of $R^{Aa}$, $R^{Ac}$, and $R^{Ad}$ may be bonded to each other to form a ring.

(14) The composition for forming an ion exchange film according to (13), in which a content of the radical polymerization initiator is 0.1 parts by mass to 20 parts by mass with respect to 100 parts by mass of the total solid content of the composition.

(15) The composition for forming an ion exchange film according to any one of (8) to (14), in which the composition contains a solvent.

(16) The composition for forming an ion exchange film according to (15), in which the solvent is water or a water-soluble solvent.

(17) The composition for forming an ion exchange film according to any one of (8) to (16), in which a content of the solvent is 5 parts by mass to 60 parts by mass with respect to 100 parts by mass which is the total mass of the composition.

(18) A production method for an ion exchange film, including: irradiating the composition for forming an ion exchange film according to any one of (8) to (17) with an energy ray; and crosslinking and curing the composition for forming an ion exchange film.

(19) The production method for an ion exchange film according to (18), in which the crosslinking and curing reaction is performed by the irradiation with an energy ray and heating.

(20) The production method for an ion exchange film according to (19), in which the heating is performed after the irradiation with an energy ray.

(21) The production method for an ion exchange film according to any one of (18) to (20), in which after the support is coated with the composition and/or the support is impregnated with the composition by using the composition for forming an ion exchange film, the crosslinking and curing reaction is performed.

(22) A production method for an ion exchange film, including: crosslinking and curing a compound expressed by General Formula (MI-a) below and a compound expressed by General Formula (MI-b) below or a compound expressed by General Formula (MII-a) below and a compound expressed by General Formula (MII-b) below by photoradical polymerization reaction in water or a water-soluble solvent in presence of a photopolymerization initiator,

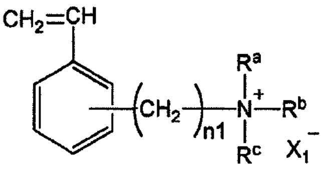

General Formula (MI-a)

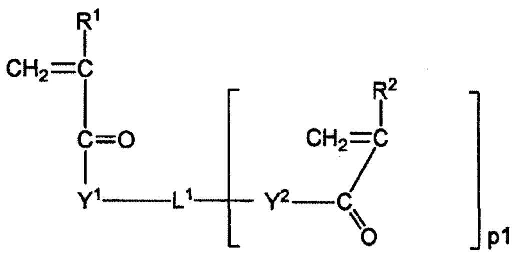

General Formula (MI-b)

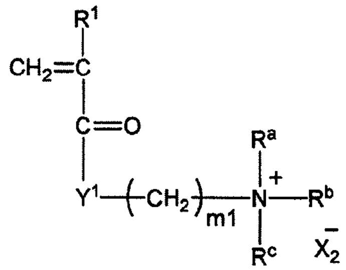

General Formula (MII-a)

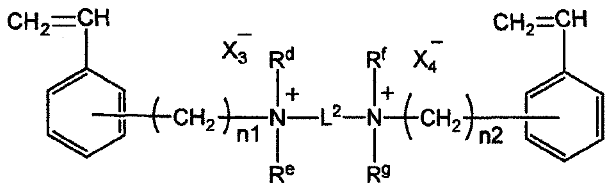

General Formula (MII-b)

in General Formulae (MI-a), (MI-b), (MII-a) and (MII-b), each of $R^1$ and $R^2$ independently represents a hydrogen atom or an alkyl group, each of $Y^1$ and $Y^2$ independently represents -O- or -N(Rx)-, here, Rx represents a hydrogen atom or an alkyl group, $L^1$ represents a p1 + 1-valent linking group having 2 or more carbon atoms, $L^2$ represents a bivalent linking group, p1 represents an integer of 1 or greater, each of n1, n2, and m1 independently represents an integer of 1 or greater, each of $R^a$ to $R^g$ independently represents an alkyl group or an aryl group, 2 or 3 of $R^a$ to $R^c$ may bonded to each other to form a ring, 2 to 4 of $R^d$ to $R^g$ may bonded to each other to form a ring, and each of $X_1^-$ to $X_4^-$ independently represents an organic or inorganic anion.

In this specification, the expression "to" is used to have a meaning of including numerical values indicated before and after the expression "to" as a lower limit and an upper limit.

In addition, unless described otherwise, in respective general formulae, if there are plural groups indicated by the same reference numerals, the groups may be identical to or different from each other. In the same manner, if there are plural repetitions of partial structures, the repetitions mean both of the identical repetitions or a mixture of different repetitions in the regulated range.

Further, unless otherwise described, a geometric isomer which is a substitution form of a double bond in respective general formulae may be an E isomer or a Z isomer, or a mixture thereof, even if one side of the isomer is described, in convenience of indication.

According to the invention, the expression "acryl" includes a group in which not only a methyl group but also an alkyl group are substituted at an $\alpha$ position of an acyl group such as acryl or methacryl, and used as an expression collectively referring to acids thereof, salts thereof, esters thereof, or amides thereof. That is, both of acrylic acid ester, amide, or acids or salts thereof and $\alpha$-alkyl substituted acrylic acid ester, amide, or acids or salts thereof are included.

According to the invention, it is possible to provide an ion exchange film which has excellent film resistance, excellent water content, and excellent water permeability, has suppressed generation of a pin hole, and thus can be used in usages in a wide range, a composition for forming the ion exchange film, and a production method for the ion exchange film. According to the production method of the invention, it is possible to obtain the ion exchange film in an extremely short period of time.

Aforementioned and other characteristic and advantages of the invention can be revealed by the following description appropriately with reference to the accompanying drawings.

## BRIEF DESCRIPTION OF THE DRAWINGS

Fig. 1 is a diagram schematically illustrating a flow channel of a device for measuring water permeability of a film.

## DESCRIPTION OF THE PREFERRED EMBODIMENTS

«Ion exchange film»

The ion exchange film according to the invention is an anion exchanging film.

The ion exchange film according to the invention includes at least one type of porous supports, and
a polymer resin disposed in pores of the porous support,
and the polymer resin contains at least one type of specific styrene-acryl copolymers according to the invention.

If the film according to the invention includes a support, the thickness of the film according to the invention is preferably 40 $\mu$m to 500 $\mu$m, more preferably 40 $\mu$m to 200 $\mu$m, and particularly preferably 70 $\mu$m to 150 $\mu$m, including the thickness of the support.

<Styrene-acryl copolymer>

The styrene-acryl copolymer according to the invention is a polymer for exchanging anions, has a group of quaternary ammonium, which is an onium group, and exchanges an anion through this group.

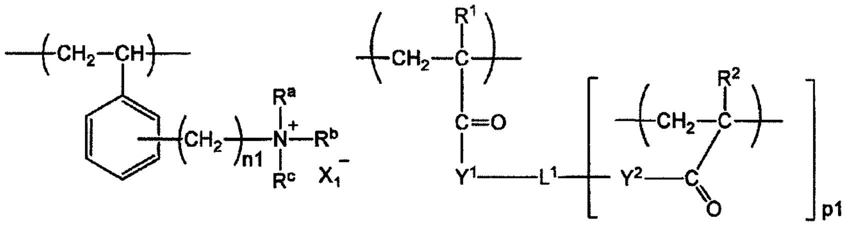

General Formula (PI)

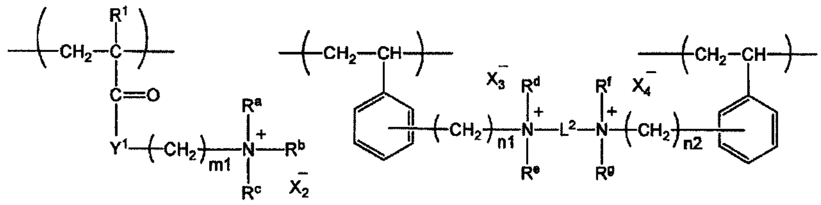

General Formula (PII)

In General Formulae (PI) and (PII), each of $R^1$ and $R^2$ independently represents a hydrogen atom or an alkyl group. Each of $Y^1$ and $Y^2$ independently represents -O- or -N(Rx)-. Here, Rx represents a hydrogen atom or an alkyl group. $L^1$ represents a p1 + 1-valent linking group having 2 or more carbon atoms, and $L^2$ represents a bivalent linking group. p1 represents an integer of 1 or greater. Each of n1, n2, and m1 independently represents an integer of 1 or greater, each of $R^a$ to $R^g$ independently represents an alkyl group or an aryl group, 2 or 3 of $R^a$ to $R^c$ may bonded to each other to form a ring, and 2 to 4 of $R^d$ to $R^8$ may bonded to each other to form a ring. Each of $X_1^-$ to $X_4^-$ independently represents an organic or inorganic anion.

The alkyl group in $R^1$, $R^2$, Rx, and $R^a$ to $R^g$ may have a substituent, and the aryl group in $R^a$ to $R^g$ may have a substituent. In this manner, as the substituent, a substituent selected from a substituent group Z below is preferable.

Substituent group Z:

The substituent group Z may include an alkyl group (alkyl group preferably having 1 to 30 carbon atoms, more preferably having 1 to 20 carbon atoms, and particularly preferably having 1 to 10 carbon atoms, and examples thereof include methyl, ethyl, Iso-propyl, tert-butyl, n-octyl, 2-ethylhexyl, n-decyl, n-hexadecyl), a cycloalkyl group (a cycloalkyl group preferably having 3 to 30 carbon atoms, more preferably having 3 to 20 carbon atoms, and particularly preferably having 3 to 10 carbon atoms, and examples thereof include cyclopropyl, cyclopentyl, and cyclohexyl.), an alkenyl group (an alkenyl group preferably having 2 to 30 carbon atoms, more preferably having 2 to 20 carbon atoms, and particularly preferably having 2 to 10 carbon atoms, and examples thereof include vinyl, allyl, 2-butenyl, and 3-pentenyl.), an alkynyl group (an alkynyl group preferably having 2 to 30 carbon atoms, more preferably having 2 to 20 carbon atoms, and particularly preferably having 2 to 10 carbon atoms, and examples thereof include propargyl and 3-pentynyl.), an aryl group (an aryl group preferably having 6 to 30 carbon atoms, more preferably having 6 to 20 carbon atoms, particularly preferably having 6 to 12 carbon atoms, and examples thereof include phenyl, p-methylphenyl, naphthyl, and anthranyl.), an amino group (the amino group includes an amino group, an alkylamino group, and an arylamino group, the amino group is an amino group preferably having 0 to 30 carbon atoms, more preferably having 0 to 20 carbon atoms, and particularly preferably having 0 to 10 carbon atoms, and examples thereof include amino, methylamino, dimethylamino, diethylamino, dibenzylamino, diphenylamino, and ditolylamino.), an alkoxy group (an alkoxy group preferably having 1 to 30 carbon atoms, more preferably having 1 to 20 carbon atoms, particularly preferably having 1 to 10 carbon atoms, and examples thereof include methoxy, ethoxy, butoxy, and 2-ethylhexyloxy.), an aryloxy group (an aryloxy group preferably having 6 to 30 carbon atoms, more preferably having 6 to 20 carbon atoms, and particularly preferably having 6 to 12 carbon atoms, and examples thereof include phenyloxy, 1-naphthyloxy, and 2-naphthyloxy.), and a hetero ring oxy group (a hetero ring oxy group preferably having 2 to 30 carbon atoms, more preferably having 2 to 20 carbon atoms,

particularly preferably having 2 to 12 carbon atoms, and examples thereof include pyridyloxy, pyradyloxy, pyrimidyloxy, and quinolyloxy.),

an acyl group (an acyl group preferably having 1 to 30 carbon atoms, more preferably having 1 to 20 carbon atoms, and particularly preferably having 1 to 12 carbon atoms, and examples thereof include acetyl, benzoyl, formyl, and pivaloyl.), an alkoxycarbonyl group (an alkoxycarbonyl group preferably having 2 to 30 carbon atoms, more preferably having 2 to 20 carbon atoms, and particularly preferably having 2 to 12 carbon atoms, and examples thereof include methoxycarbonyl and ethoxycarbonyl.), an aryloxycarbonyl group (an aryloxycarbonyl group preferably having 7 to 30 carbon atoms, more preferably having 7 to 20 carbon atoms, and particularly preferably having 7 to 12 carbon atoms, and examples thereof include phenyloxycarbonyl.), an acyloxy group (an acyloxy group preferably having 2 to 30 carbon atoms, more preferably having 2 to 20 carbon atoms, and particularly preferably having 2 to 10 carbon atoms, and examples thereof include acetoxy and benzoyloxy.), an acylamino group (an acylamino group preferably having 2 to 30 carbon atoms, more preferably having 2 to 20 carbon atoms, and particularly preferably having 2 to 10 carbon atoms, and examples thereof include acetylamino and benzoylamino.),

an alkoxycarbonylamino group (an alkoxycarbonylamino group preferably having 2 to 30 carbon atoms, more preferably having 2 to 20 carbon atoms, and particularly preferably having 2 to 12 carbon atoms, and examples thereof include methoxycarbonylamino.), an aryloxycarbonylamino group (an aryloxycarbonylamino group preferably having 7 to 30 carbon atoms, more preferably having 7 to 20 carbon atoms, particularly preferably having 7 to 12 carbon atoms, and examples thereof include phenyloxycarbonylamino.), an alkyl or aryl sulfonylamino group (preferably having 1 to 30 carbon atoms, more preferably having 1 to 20 carbon atoms, and particularly preferably having 1 to 12 carbon atoms, and examples thereof include methanesulfonylamino and benzenesulfonylamino.), a sulfamoyl group (the sulfamoyl group includes a sulfamoyl group, and an alkyl or aryl sulfamoyl group, the sulfamoyl group is a sulfamoyl group preferably having 0 to 30 carbon atoms, more preferably having 0 to 20 carbon atoms, and particularly preferably having 0 to 12 carbon atoms, and examples thereof include sulfamoyl, methylsulfamoyl, dimethylsulfamoyl, and phenylsulfamoyl.),

a carbamoyl group (the carbamoyl group includes a carbamoyl group, an alkyl or aryl carbamoyl group, the carbamoyl group is a carbamoyl group preferably having 1 to 30 carbon atoms, more preferably having 1 to 20 carbon atoms, and particularly preferably having 1 to 12 carbon atoms, and examples thereof include carbamoyl, methylcarbamoyl, diethylcarbamoyl, and phenylcarbamoyl.), an alkylthio group (an alkylthio group preferably having 1 to 30 carbon atoms, more preferably having 1 to 20 carbon atoms, and particularly preferably having 1 to 12 carbon atoms, and examples thereof include methylthio, and ethylthio.), an arylthio group (an arylthio group preferably having 6 to 30 carbon atoms, more preferably having 6 to 20 carbon atoms, and particularly preferably having 6 to 12 carbon atoms, and examples thereof include phenylthio.), a hetero ring thio group (a hetero ring thio group preferably having 2 to 30 carbon atoms, more preferably having 2 to 20 carbon atoms, and particularly preferably having 2 to 12 carbon atoms, and examples thereof include pyridylthio, 2-benzimidazolylthio, 2-benzoxazolylthio, and 2-benzothiazolylthio.),

an alkyl or aryl sulfonyl group (an alkyl or aryl sulfonyl group preferably having 1 to 30 carbon atoms, more preferably having 1 to 20 carbon atoms, and particularly preferably having 1 to 12 carbon atoms, and examples thereof include mesyl and tosyl.), an alkyl or aryl sulfinyl group (an alkyl or aryl sulfinyl group preferably having 1 to 30 carbon atoms, more preferably having 1 to 20 carbon atoms, and particularly preferably having 1 to 12 carbon atoms, and examples thereof include methanesulfinyl, and benzenesulfinyl.), an ureido group (an ureido group preferably having 1 to 30 carbon atoms, more preferably having 1 to 20 carbon atoms, particularly preferably having 1 to 12 carbon atoms, and examples thereof include ureido, methylureido, and phenylureido.), a phosphoric acid amide group (a phosphoric acid amide group preferably having 1 to 30 carbon atoms, more preferably having 1 to 20 carbon atoms, particularly preferably having 1 to 12 carbon atoms, and examples thereof include diethyl phosphoric acid amide and phenyl phosphoric acid amide.), a hydroxy group, a mercapto group, a halogen atom (for example, a fluorine atom, a chlorine atom, a bromine atom, and an iodine atom, and a fluorine atom is more preferable),

a cyano group, a sulfo group, a carboxyl group, an oxo group, a nitro group, a hydroxamic acid group, a sulfino group, a hydrazino group, an imino group, and a hetero ring group (a hetero ring group preferably having 1 to 30 carbon atoms and more preferably having 1 to 12 carbon atoms, as a ring-constituting hetero atom, for example, a nitrogen atom, an oxygen atom, and a sulfur atom are preferable, and specific examples thereof include imidazolyl, pyridyl, quinolyl, furyl, thienyl, piperidyl, morpholino, benzoxazolyl, benzimidazolyl, benzothiazolyl, a carbazolyl group, and an azepinyl group.), a silyl group (a silyl group preferably having 3 to 40 carbon atoms, more preferably having 3 to 30 carbon atoms, and particularly preferably having 3 to 24 carbon atoms, and examples thereof include trimethylsilyl and triphenylsilyl.), and a silyloxy group (a silyloxy group preferably having 3 to 40 carbon atoms, more preferably having 3 to 30 carbon atoms, particularly preferably having 3 to 24 carbon atoms, and examples thereof include trimethylsilyloxy and triphenylsilyloxy.).

These substituents may be further substituted with any one or more substituents selected from the substituent group Z above.

In addition, according to the invention, when there are plural substituents in one structural portion, the substituents may be linked to each other to form a ring or may be condensed with a portion or all of the structural portion to

form an aromatic ring or an unsaturated heterocyclic ring.

The alkyl group in $R^1$ and $R^2$ is preferably an alkyl group having 1 to 4 carbon atoms, and examples thereof include methyl, ethyl, isopropyl, n-butyl, isobutyl, and t-butyl.

As $R^1$ and $R^2$, a hydrogen atom or a methyl group is preferable, and among these, a hydrogen atom is preferable.

$Y^1$ and $Y^2$ represent -O- or -N(Rx)-, but -N(Rx)- is preferable, and it is particularly preferable that both of $Y^1$ and $Y^2$ are -N(Rx)-, together.

Here, as the alkyl group in Rx, an alkyl group having 1 to 4 carbon atoms is preferable.

Rx is particularly preferably a hydrogen atom.

$L^1$ represents a p1 + 1-valent linking group having 2 or more carbon atoms. Here, p1 represents an integer of 1 or greater, an integer of 1 to 5 is preferable, an integer of 1 to 3 is more preferable, and 1 is particularly preferable.

As the linking group in $L^1$, it is preferable that atoms bonded to $Y^1$ and $Y^2$ are all carbon atoms.

If p1 is 1, for example, a straight chain, branched, or cyclic alkylene group (an alkylene group preferably having 2 to 30 carbon atoms, more preferably having 2 to 12 carbon atoms, and further preferably having 2 to 4 carbon atoms, and examples thereof include ethylene, propylene, butylene, pentylene, hexylene, octylene, and decylene. In addition, in the case of a cyclic alkylene group, that is, a cycloalkylene group, a lowest number of carbon atoms is preferably 3, and cyclopentylene, and cyclohexylene are more preferably.), an -(alkyleneoxy)$_t$-alkylene group (here, t represents an integer of 1 or greater, an integer of 1 to 50 is preferable, an integer of 1 to 20 is more preferable, and an integer of 1 to 10 is further preferable. The alkylene is alkylene preferably having 2 to 30 carbon atoms, more preferably having 2 to 12 carbon atoms, and further preferably having 2 to 4 carbon atoms.

Examples thereof include ethyleneoxyethylene, propyleneoxypropylene, butyleneoxybutylene, pentyleneoxypentylene, hexyleneoxyhexylene, octyleneoxyoctylene, decyleneoxyethylene, polyethyleneoxyethylene, and polypropyleneoxypropylene.), an aralkylene group (an aralkylene group preferably having 7 to 30 carbon atoms and more preferably having 7 to 13 carbon atoms, and examples thereof include benzylidene and cinnamylidene.), an arylene group (an arylene group preferably having 6 to 30 carbon atoms and more preferably having 6 to 15 carbon atoms, and examples thereof include phenylene, cumenylene, mesitylene, tolylene, and xylylene.), an -alkylene-E-alkylene group (here, E represents -S-, -SO-, $-SO_2-$, -S-S-, -C(=O)-, $-N(R^{L1})-$, $-N^+(R^{L2})(R^{L3})-$, phenylene, cycloalkylene, alkylene, a bivalent hetero group, and a group obtained by combining these groups. $R^{L1}$ represents a hydrogen atom, an alkyl group, or an aryl group, and each of $R^{L2}$ and $R^{L3}$ independently represents an alkyl group or an aryl group.), an -arylene-E-arylene group (here, E has the same meaning as above.), and an arylene-E-alkylene group (here, E has the same meaning as above.).

Here, the bivalent hetero ring group in E above is preferably a bivalent hetero ring group below.

In addition, these respective rings may have substituents, and the substituents are preferably substituents selected from the substituent group Z.

Among these, 1,4-diazabicyclo[2.2.2]octane ring(diazabicyclo[2.2.2]octane-1,4-diyl) and 1,4-piperazine ring(piperazine-1,4-diyl) are preferable. In addition, 2 nitrogen atoms of the piperazine ring and the dihydropyrazine ring are quaternarized with alkyl groups, and the alkyl groups are not indicated.

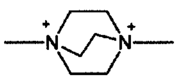 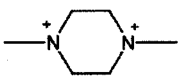 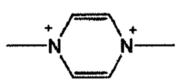 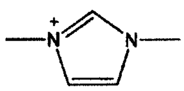

If p1 is 3 or greater, the linking group expressed by $L^1$ is preferably the linking groups below.

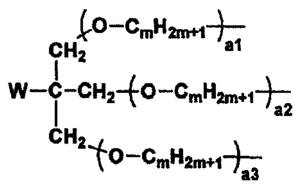

Linking group (3a)

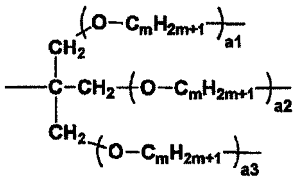

Linking group (4a)

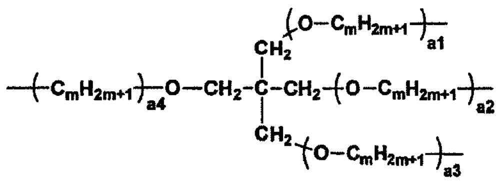

Linking group (4b)

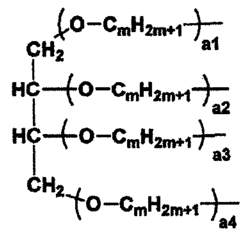

Linking group (4c)

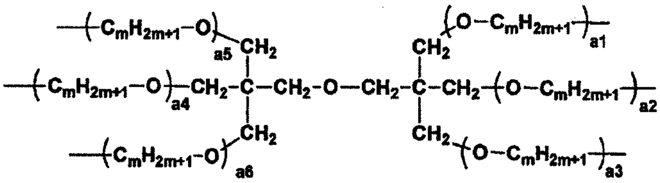

Linking group (6a)

W represents an alkyl group, a hydroxy group, or an amino group, m represents an integer of 2 or greater, and each of a1 to a6 independently represents an integer of 0 or greater.

m is preferably 2 or 3.

a1 to a6 are preferably 0 to 20 and more preferably 0 to 10.

Each group in $L^1$ may have a substituent, examples of the substituent include the substituent group Z, and an alkyl group, a hydroxy group, an onio group (preferably, an ammonio group such as a quaternary ammonium group and a quaternary salt of a nitrogen-containing hetero ring such as imidazolium), and a halogen atom are preferable.

The alkyl group in $R^a$ to $R^g$ may have a straight chain shape or a branched shape, and may have a substituent. The substituent may include a substituent included in the substituent group Z. The number of carbon atoms of the alkyl group is preferably 1 to 4, and among these, a methyl group is preferable.

The aryl group in $R^a$ to $R^g$ preferably has 6 to 20 carbon atoms and may have a substituent. The substituent includes the substituent included in the substituent group Z. The aryl group is, for example, phenyl and naphthyl.

$R^a$ to $R^g$ are preferably alkyl groups.

2 or 3 of $R^a$ to $R^c$ may be bonded to each other to form a ring, and the ring is a nitrogen-containing hetero ring, preferably a 5- or 6-membered ring, and may be a monocyclic ring or a crosslinked ring, or may be an aromatic ring. Examples thereof include a piperidine ring, a piperazine ring, a morpholine ring, a thiomorpholine ring, a pyrrole ring, a pyrazole ring, an imidazole ring, a triazole ring, a pyridine ring, a dihydropyrazine ring, and a quinuclidine ring.

2 to 4 of $R^d$ to $R^g$ are bonded to each other to form a ring, and among rings that may be formed with $R^a$ to $R^c$, a ring including at least 2 nitrogen atoms in the ring-constituting hetero atom is exemplified, and examples thereof include a pyrazole ring, an imidazole ring, a triazole ring, a piperazine ring, a dihydropyrazine ring, and a quinuclidine ring.

The formed ring may be condensed with a benzene ring.

m1 represents an integer of 1 or greater, and is preferably an integer of 1 to 5 and more preferably an integer of 2 or 3.

n1 and n2 represent an integer of 1 or greater, and is preferably 1 to 5, more preferably 1 to 4, and particularly preferably 1.

$X_1^-$ to $X_4^-$ represent organic or inorganic anions and are preferably inorganic anions. Examples of the organic anion include trifluoromethane sulfonate, tetrafluoro borate, hexafluoro phosphate, an acetatic acid anion, a trifluoro acetate anion, and bistrifluoromethanesulfonyl imidate. Examples of the inorganic anion include a halogen anion (a fluorine anion, a chlorine anion, a bromine anion, and an iodine anion), a nitric acid anion, a sulfuric acid dianion, and a phosphoric acid anion, and a halogen anion is preferable. Among halogen anions, a chlorine anion and a bromine anion are preferable, and a chlorine anion is particularly preferable.

It is preferable that the polymer expressed by General Formula (PI) or (PII) according to the invention does not include a partial structure unit below.

That is, according to the invention, as described below, in the production of the ion exchange film according to the invention, the quaternary ammonium group is not introduced after polymerization curing, but a monomer having the quaternary ammonium group is polymerized and cured, and thus the partial structure as below does not have to be

included, in principle.

However, even if the partial structure is embedded in impurities included in a monomer raw material, the content of the partial structure is 5 parts by mass or less, more preferably 3 parts by mass or less, and further preferably 1 part by mass or less with respect to 100 parts by mass of the polymer expressed by General Formula (PI) or (PII).

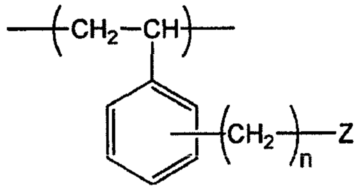

Partial structure unit (x)

In a partial structure unit (x), n represents n1 or n2 in General Formulae (PI) and (PII), Z represents a halogen atom, a hydroxy group, an alkylsulfonyloxy group, an aryl sulfonyloxy group, an acyl group, or $-N(R^h)(R^i)$. Here, each of $R^h$ and $R^i$ independently represents a hydrogen atom, an alkyl group, an aryl group, or a hetero ring group. $R^h$ and $R^i$ are bonded to each other to form a ring.

Here, Z is a group released due to substitution reaction of the quaternary amino compound as performed in JP2000-212306A or a group corresponding to an amino group [$-N(R^h)(R^i)$ above] to be introduced to a quaternary ammonium group, thereafter.

The polymer expressed by General Formula (PI) or (PII) according to the invention is made of a monomer component expressed by General Formula (MI-a) below and a crosslinking monomer component expressed by General Formula (MI-b) below or a monomer component expressed by General Formula (MII-a) below and a crosslinking monomer component expressed by General Formula (MII-b) below.

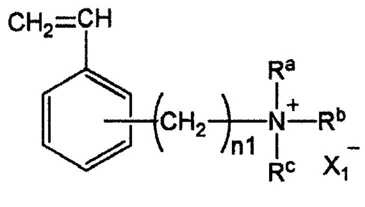

General Formula (MI-a)

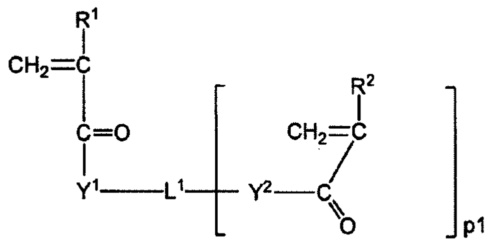

General Formula (MI-b)

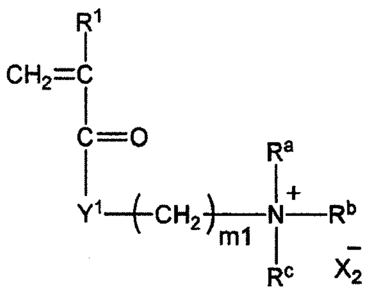

General Formula (MII-a)

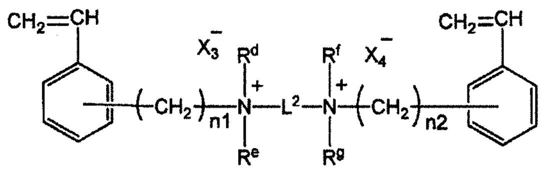

General Formula (MII-b)

In General Formulae (MI-a), (MI-b), (MII-a), and (MII-b), $R^1$, $R^2$, $Y^1$, $Y^2$, $L^1$, $L^2$, p1, n1, n2, m1, $R^a$ to $R^g$, and $X_1^-$ to $X_4^-$ respectively have the same meaning as $R^1$, $R^2$, $Y^1$, $Y^2$, $L^1$, $L^2$, p1, n1, n2, m1, $R^a$ to $R^g$, and $X_1^-$ to $X_4^-$ in General Formulae (PI) and (PII), and preferable scopes thereof are the same.

In addition, in the polymer expressed by General Formula (PI) or (PII), it is preferable that the content of a structure unit obtained from a styrene skeleton or a component including a styrene skeleton is I part by mass to 85 parts by mass in the case of General Formula (PI) and 10 parts by mass to 90 parts by mass in the case of General Formula (PII) with respect to 100 parts by mass of the polymer, since the effect of the invention is effectively exhibited.

As described in detail below, according to the invention, the polymer is preferably crosslinked and cured by

photoradical polymerization reaction, and thus preferably polymerized and cured in presence of a photoradical polymerization initiator.

<Composition for forming the ion exchange film>

The composition for forming the ion exchange film according to the invention is a composition for forming the ion exchange film according to the invention, and includes a compound expressed by General Formula (MI-a) and a compound expressed by General Formula (MI-b), or a compound expressed by General Formula (MII-a) and a compound expressed by General Formula (MII-b).

In the polymer expressed by General Formula (PI) or (PII), the content of a structure unit obtained from the styrene skeleton or a component including a styrene skeleton is preferably 1 part by mass to 85 parts by mass in the case of General Formula (PI) and 10 parts by mass to 90 parts by mass in the case of General Formula (PII) with respect to 100 parts by mass of the polymer, and this relationship in the composition for forming the ion exchange film according to the invention is maintained.

That is, in the combination of the monomer of the compound expressed by General Formula (MI-a) and the compound expressed by General Formula (MI-b), the compound expressed by General Formula (MI-a) is preferably contained in the range of 1 part by mass to 85 parts by mass with respect to 100 parts by mass of the solid content of the composition. Meanwhile, in the combination of the monomers of the compound expressed by General Formula (MII-a) and the compound expressed by General Formula (MII-b), the compound expressed by General Formula (MII-b) is preferably contained in the range of 10 parts by mass to 90 parts by mass.

The composition for forming the ion exchange film according to the invention may contain various materials and solvents in addition to the respective monomers. The monomers used in the invention are described in sequence.

(Monofunctional monomer)

According to the invention, the compound expressed by General Formula (MI-a) or (MII-a) is used.

The compound has a quaternary ammonium group in a benzene ring of a styrene skeleton or has alcohol of acryl ester or acrylamide (an acid portion is an acrylic acid or an acrylic acid having an alkyl group in an $\alpha$ position) or a quaternary ammonium group in an amine portion.

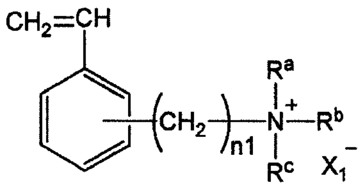

General Formula (MI-a)

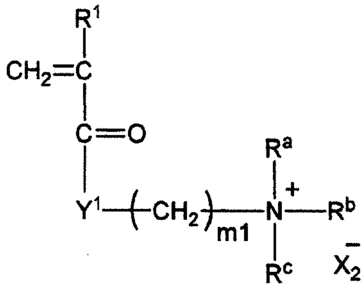

General Formula (MII-a)

Specific examples of the compound (styrene-based monomer) expressed by General Formula (MI-a) or (MII-a) are provided, but the invention is not limited thereto.

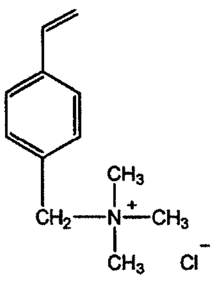

(MIa-1)

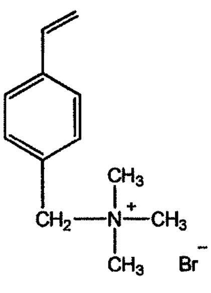

(MIa-2)

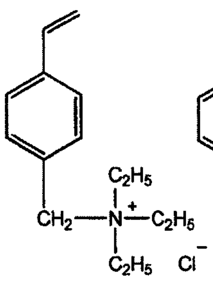

(MIa-3)

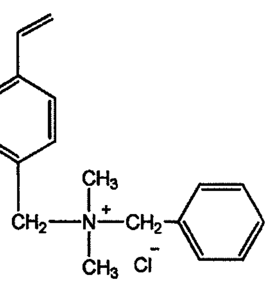

(MIa-4)

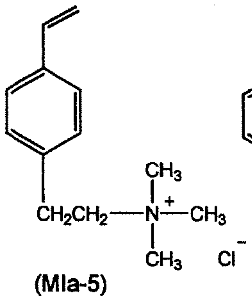
(MIa-5)

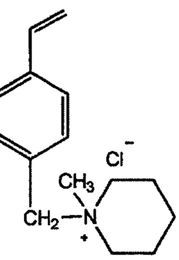
(MIa-6)

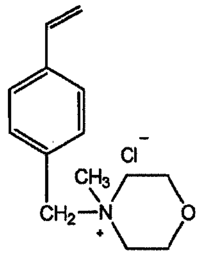
(MIa-7)

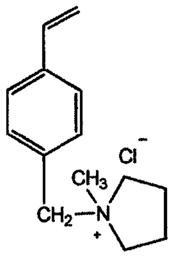
(MIa-8)

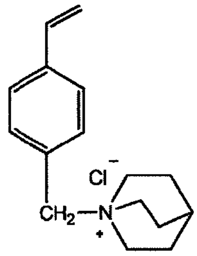
(MIa-9)

The compound expressed by General Formula (MI-a) can be synthesized in methods disclosed in JP2000-229917A and JP2000-212306A or a method in conformity with the methods. In addition, the compound can be obtained as a commercially available product from Sigma-Aldrich Co. LLC. or the like.

In the composition for forming the ion exchange film according to the invention, two or more compounds expressed by General Formula (MI-a) can be used in combination.

According to the invention, the content of the compound expressed by General Formula (MI-a) is preferably 1 part by mass to 85 parts by mass, more preferably 10 parts by mass to 80 parts by mass, and particularly preferably 20 parts by mass to 75 parts by mass with respect to 100 parts by mass of the solid content of the composition for forming the ion exchange film.

Specific examples of the compound (acrylic monomer) expressed by General Formula (MII-a) are provided, but the invention is not limited thereto.

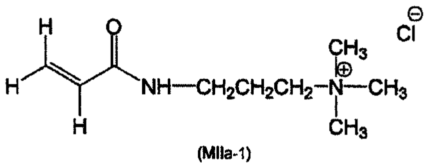
(MIIa-1)

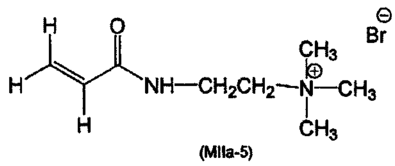
(MIIa-5)

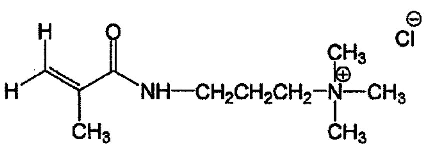
(MIIa-2)

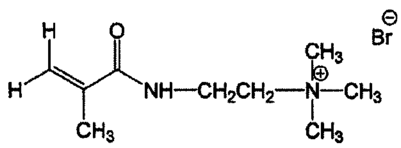
(MIIa-6)

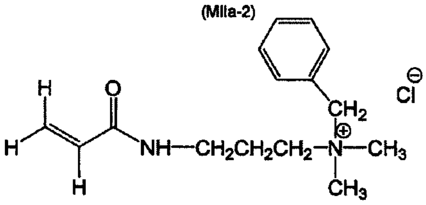
(MIIa-3)

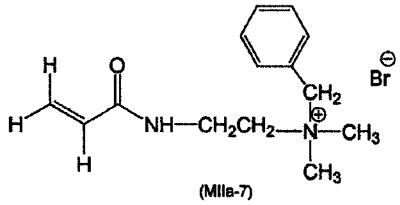
(MIIa-7)

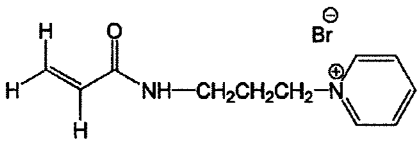

(MIIa-4)

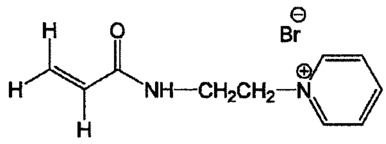

(MIIa-8)

These compounds are marketed from Kohjin Film & chemicals Co., Ltd., KH Neochem Co., Ltd., Fluka AG, Sigma-Aldrich Co. LLC., Toagosei Co., Ltd., and may be easily synthesized by a well-known method.

In the composition for forming the ion exchange film according to the invention, two or more types of compounds expressed by General Formula (MII-a) can be used in combination.

According to the invention, the content of the compound expressed by General Formula (MII-a) is preferably 10 parts by mass to 90 parts by mass, more preferably 15 parts by mass to 85 parts by mass, and particularly preferably 20 parts by mass to 75 parts by mass with respect to 100 parts by mass of the solid content of the composition for forming the ion exchange film.

(Crosslinking monomer)

The crosslinking monomer is a compound (crosslinking monomer) having 2 or more ethylenically unsaturated groups, is a multifunctional monomer, and accordingly crosslinking or curing reaction can be performed. Therefore, the compound is called a crosslinking agent or a curing agent or a hardening agent.

According to the invention, the compound expressed by General Formula (MI-b) or (MII-b) is used.

The compound expressed by General Formula (MI-b) is acryl ester or an acryl amide having high water solubility. Meanwhile, the compound expressed by General Formula (MII-b) is a compound having a group including a quaternary ammonium group in a benzene ring of a styrene skeleton.

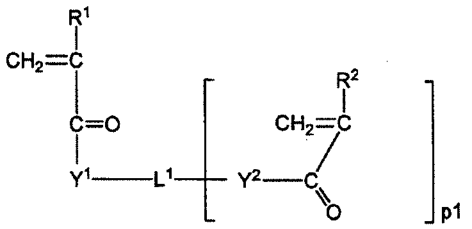

General Formula (MI-b)

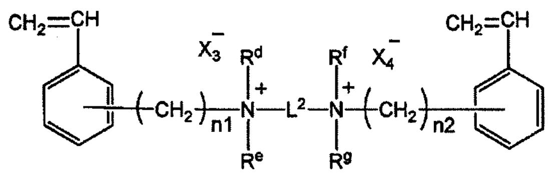

General Formula (MII-b)

Hereinafter, specific examples of the compound expressed by General Formula (MI-b) are provided, but the invention is not limited thereto.

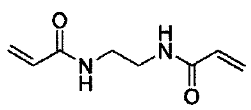

(MIb-1)

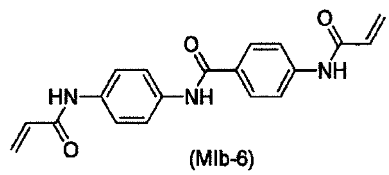

(MIb-6)

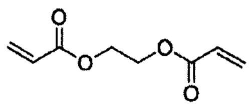

(IV-2)

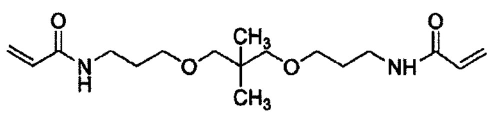

(IV-7)

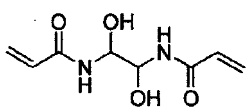

(MIb-3)

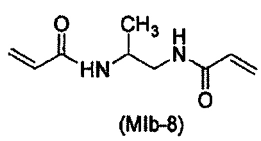

(MIb-8)

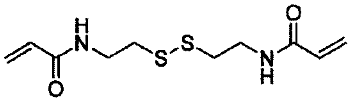

(MIb-4)

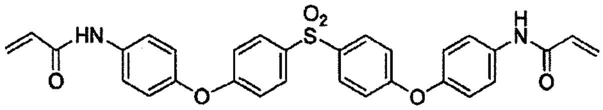

(MIb-9)

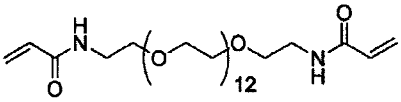

(MIb-5)

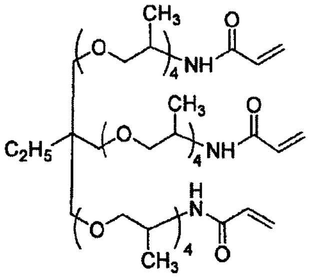

(MIb-10)

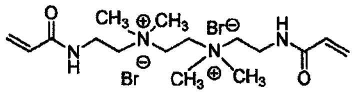

(MIb-11)

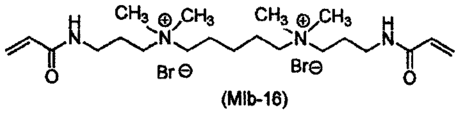

(MIb-16)

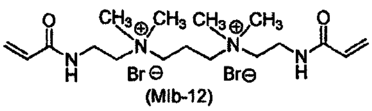

(MIb-12)

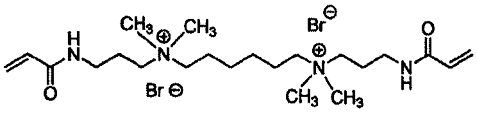

(MIb-17)

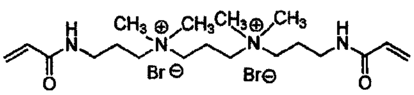

(MIb-13)

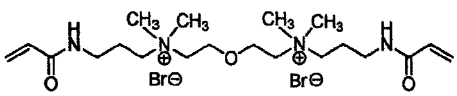

(MIb-18)

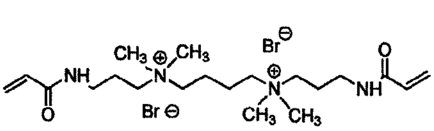

(MIb-14)

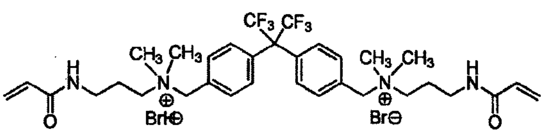

(MIb-19)

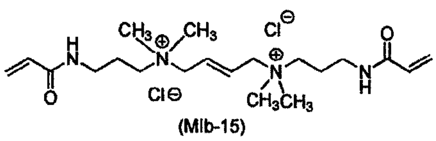

(MIb-15)

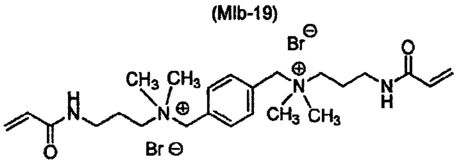

(MIb-20)

These compounds are marketed from Kohjin Film & chemicals Co., Ltd., KH Neochem Co., Ltd., Fluka AG, Sigma-Aldrich Co. LLC., Toagosei Co., Ltd., and may be easily synthesized by a well-known method.

In the composition for forming the ion exchange film according to the invention, two or more types of compounds expressed by General Formula (MI-b) may be used in combination.

According to the invention, the content of the compound expressed by General Formula (MI-b) is preferably 15 parts by mass to 99 parts by mass, more preferably 20 parts by mass to 90 parts by mass, and particularly preferably 25 parts by mass to 80 parts by mass with respect to 100 parts by mass of the solid content of the composition for forming the ion exchange film.

Hereinafter, specific examples of the compound expressed by General Formula (MII-b) are provided, but the

invention is not limited thereto.

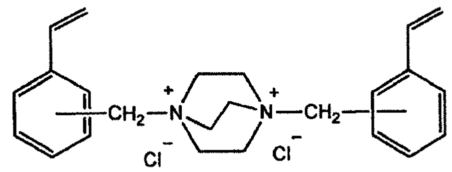

(MIIb-1)

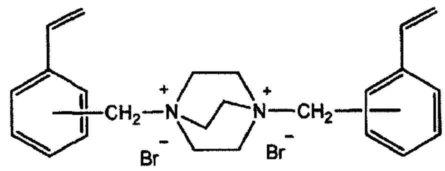

(MIIb-2)

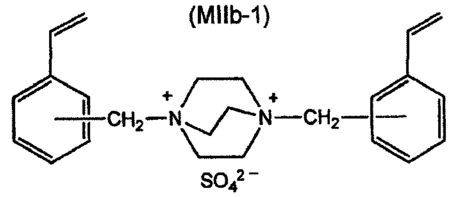

(MIIb-3)

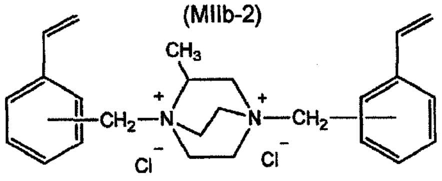

(MIIb-4)

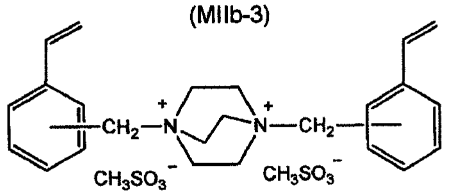

(MIIb-5)

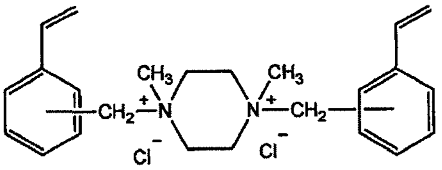

(MIIB-6)

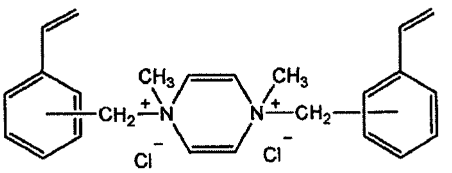

(MIIb-7)

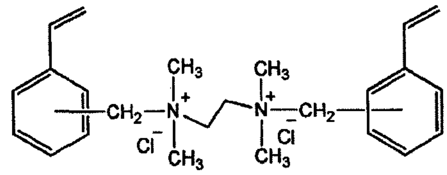

(MIIb-8)

The compound expressed by General Formula (MII-b) can be synthesized by a method disclosed in JP2000-229917A or a method in conformity with the method.

In the composition for forming the ion exchange film according to the invention, 2 or more types of the compound expressed by General Formula (MII-b) can be used in combination.

According to the invention, the content of the compound expressed by General Formula (MII-b) is preferably 10 parts by mass to 90 parts by mass, more preferably 15 parts by mass to 85 parts by mass, and particularly preferably 25 parts by mass to 80 parts by mass with respect to 100 parts by mass of the solid content of the composition for forming the ion exchange film.

In the composition for forming the ion exchange film according to the invention, the molar ratio of the compound of the monofunctional monomer expressed by General Formula (MI-a) or General Formula (MII-a) or the compound of the crosslinking monomer expressed by General Formula (MI-b) or General Formula (MII-b) is preferably 1/0.1 to 1/55, more preferably 1/0.14 to 1/55, and particularly preferably 1/0.3 to 1/55 with respect to a mol of monofunctional monomer/a mol of crosslinking monomer.

According to the invention, the crosslinking density of the polymer formed by the reaction between the compound of the monofunctional monomer expressed by General Formula (MI-a) or General Formula (MII-a) and the compound of the crosslinking monomer expressed by General Formula (MI-b) or General Formula (MII-b) is preferably 0.4 mmol/g to 2 mmol/g, more preferably 0.5 mmol/g to 2 mmol/g, and particularly preferably 1.0 mmol/g to 2 mmol/g. If the crosslinking density is in the range described above, it is preferable that the water content of the film decreases, and thus the film resistance further decreases.

In addition, according to the invention, if the constituent units of the polymer expressed by General Formula (PI) and the polymer expressed by General Formula (PII) are styrene-acryl copolymers, the structure units expressed by General Formula (MII-a) or (MII-b) may be contained in addition to the structure units expressed by General Formulae (MI-a) and (MI-b), and also the structure unit expressed by General Formula (MI-a) or (MI-b) may be included, in addition to the structure units expressed by General Formulae (MII-a) and (MII-b). In this case, the content ratio of the fundamental monofunctional monomer to the crosslinking monomer does not have to be greater than the molar ratio of a non-fundamental monofunctional monomer.

According to the invention, it is preferable that these are not preferably included.

Since three-dimensionally crosslinking is formed, the mass average molecular weight of the polymer that configures the ion exchange film according to the invention is several hundreds of thousands or greater, and may not be measured practically. In general, it is considered to be infinite.

Hereinafter, specific examples of the polymer expressed by General Formula (PI) according to the invention are provided, but the invention is not limited thereto.

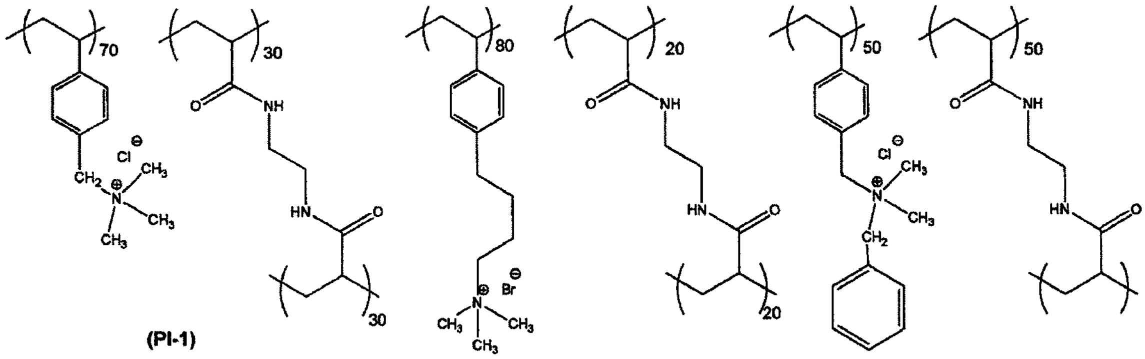

(PI-1) (PI-2) (PI-3)

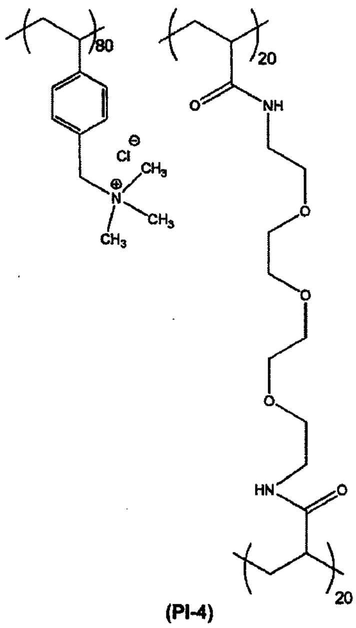

(PI-4)

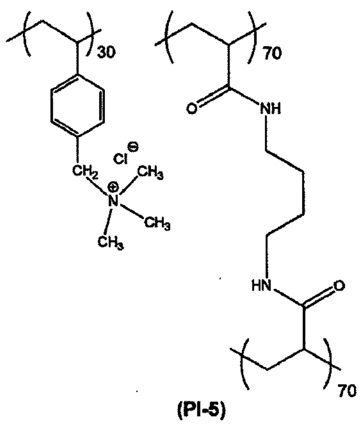

(PI-5)

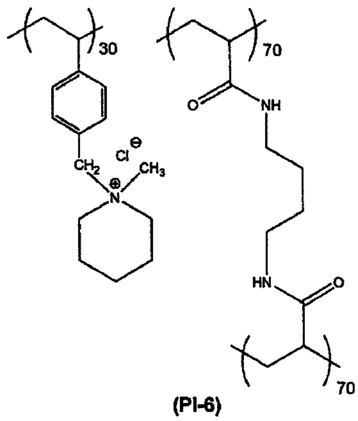

(PI-6)

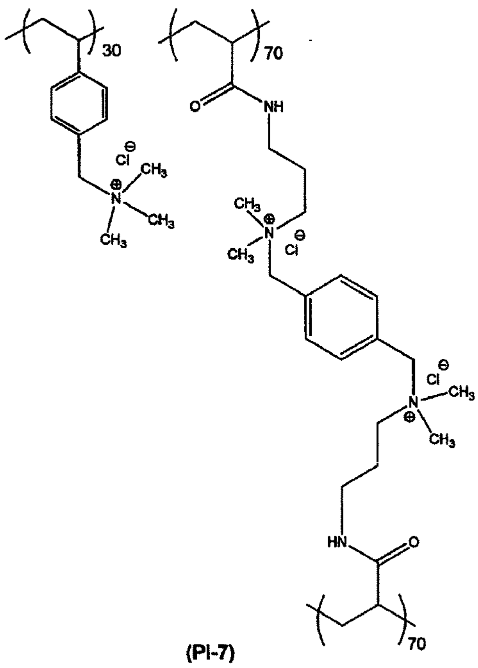

(PI-7)

Subsequently, specific examples of the polymer expressed by General Formula (PII) according to the invention

are provided, but the invention is not limited thereto.

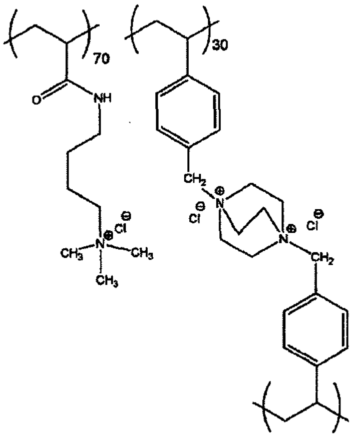

(PII-1)

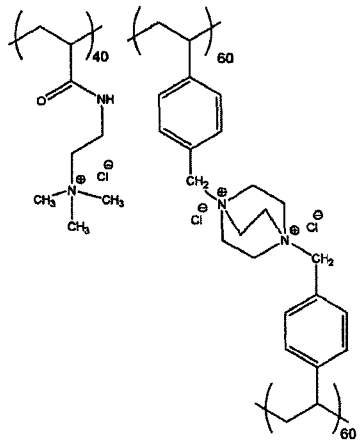

(PII-2)

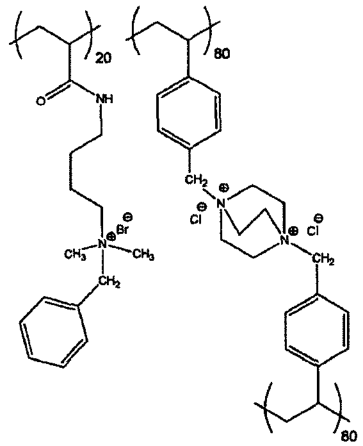

(PII-3)

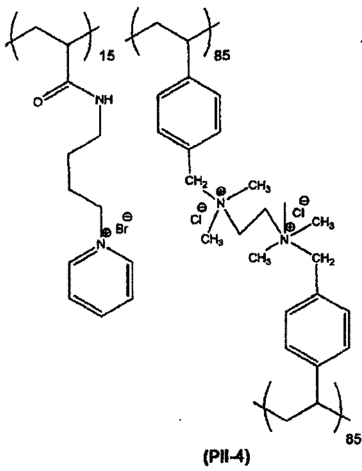

(PII-4)

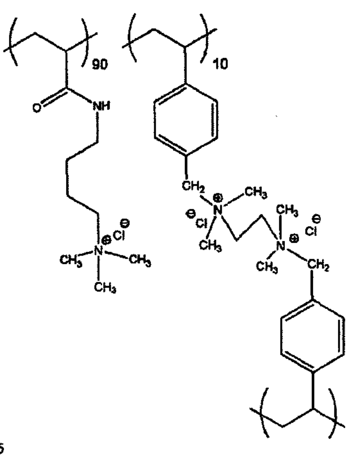

(PII-5)

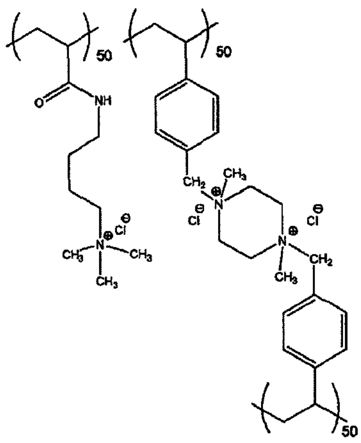

(PII-6)

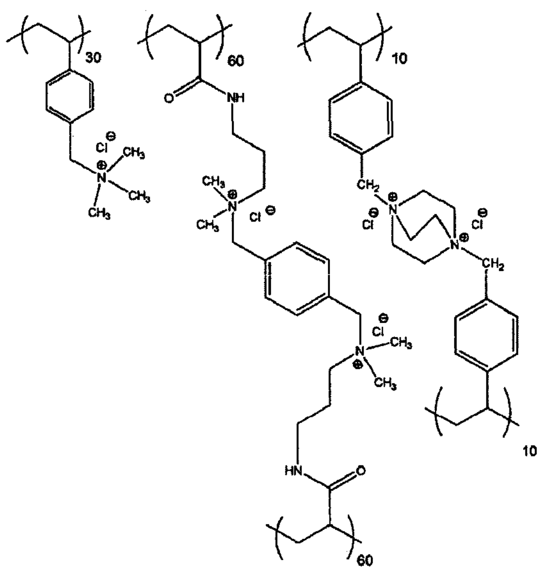

(PII-7)

(Polymerization initiator)

It is preferable that the polymerization curing reaction according to the invention is performed in the coexistence of the polymerization initiator, particularly, a photopolymerization initiator (photoradical polymerization initiator), in view of effectivity.

As the photopolymerization initiator, any compounds can be used, but according to the invention, the compound expressed by General Formula (PPI-1) or (PPI-2) below is preferable.

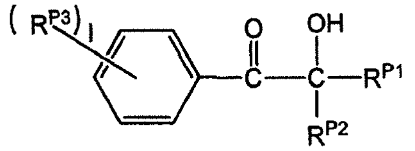

General Formula (PPI-1)

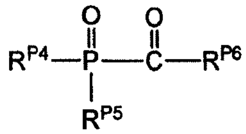

General Formula (PPI-2)

In General Formulae (PPI-1) and (PPI-2), each of $R^{P1}$ and $R^{P2}$ independently represents a hydrogen atom, an alkyl group, an alkoxy group, or an aryloxy group, $R^{P3}$ represents an alkyl group, an alkoxy group, or an aryloxy group, and 1 represents an integer of 0 to 5. $R^{P4}$ represents an alkyl group, an aryl group, an alkylthio group, or an arylthio group, $R^{P5}$ represents an alkyl group, an aryl group, an alkylthio group, an arylthio group, or an acyl group, and $R^{P6}$ represents an alkyl group or an aryl group. Here, $R^{P1}$ and $R^{P2}$ or $R^{P4}$ and $R^{P5}$ may be bonded to each other to form a ring.

$R^{P1}$ and $R^{P2}$ are preferably an alkyl group, an alkoxy group, or an aryloxy group, an alkyl group having 1 to 8 carbon atoms, an alkoxy group having 1 to 8 carbon atoms, and an aryl group having 6 to 10 carbon atoms are preferable, an alkyl group is more preferable, and methyl is particularly preferable.

The ring formed by $R^{P1}$ and $R^{P2}$ bonded to each other is preferably 5- or 6-membered ring, and among them, a cyclohexane ring and a cyclohexane ring are more preferable.

$R^{P3}$ is preferably a hydrogen atom, an alkyl group having 1 to 18 carbon atoms, an alkoxy group having 1 to 10 carbon atoms, and an aryl group having 6 to 12 carbon atoms, an alkyl group, an alkoxy group, and an aryloxy group may have a substituent, and examples of the substituent include a halogen atom, an alkyl group, an aryl group, an alkoxy group, and a hydroxy group.

The aryl group is preferably a phenyl group.

As $R^{P3}$, a hydrogen atom and an alkyl group having 1 to 4 carbon atoms are preferable, and among these, and in the case of an alkyl group, a hydroxyethyl group is preferable.

1 represents an integer of 0 to 5, and is preferably an integer of 0 to 3, and more preferably 0 or 1.

The alkyl group in $R^{P4}$ to $R^{P6}$ is preferably an alkyl group having 1 to 8 carbon atoms, the aryl group in $R^{P4}$ to $R^{P6}$ is preferably an aryl group having 6 to 16 carbon atoms, and the aryl group may have a substituent. Examples of the substituent include a halogen atom, an alkyl group, an aryl group, an alkoxy group, and a hydroxy group.

The alkylthio group or the arylthio group in $R^{P4}$ and $R^{P5}$ is preferably an alkylthio group having 1 to 12 carbon atoms and an arylthio group having 6 to 12 carbon atoms.

The acyl group in $R^{P6}$ is preferably an alkylcarbonyl group and an arylcarbonyl group, and an alkylcarbonyl group having 2 to 12 carbon atoms and an arylcarbonyl group having 7 to 17 carbon atoms are preferable. Among these, $R^{P6}$ is preferably an arylcarbonyl group and particularly preferably a phenylcarbonyl group that may have a substituent. The acyl group may have a substituent, and examples of the substituent include a halogen atom, an alkyl group, an aryl group, an alkoxy group, and a hydroxy group.

The photopolymerization initiator expressed by General Formula (PPI-1) is more preferable than the photopolymerization initiator expressed by General Formula (PPI-2).

Hereinafter, specific examples of the photopolymerization initiator expressed by General Formula (PPI-1) or (PPI-2) are provided, but the invention is not limited thereto.

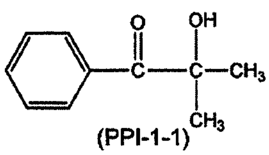

(PPI-1-1)

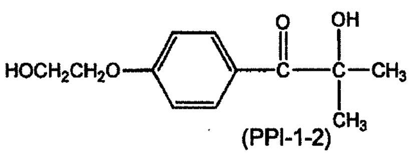

(PPI-1-2)

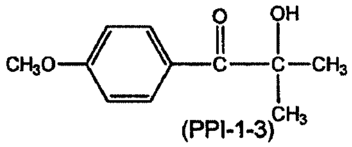

(PPI-1-3)

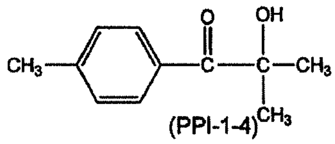

(PPI-1-4)

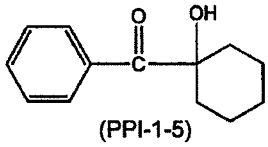

(PPI-1-5)

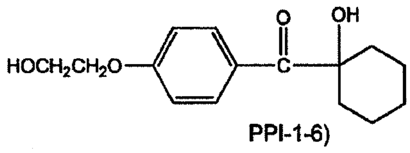

PPI-1-6)

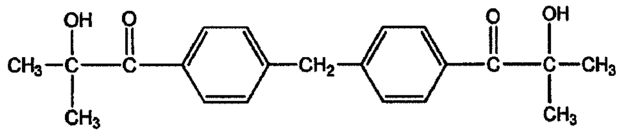

(PPI-1-7)

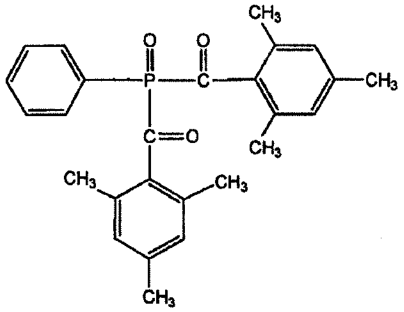

(PPI-2-1)

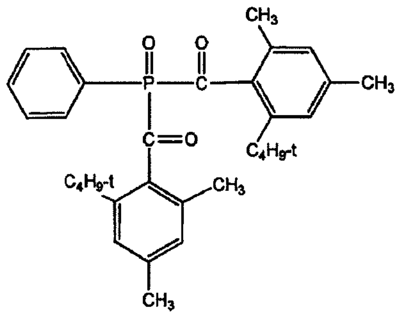

(PPI-2-2)

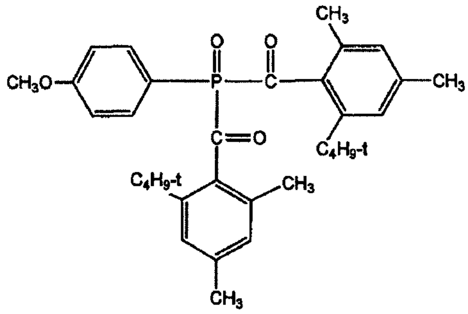

(PPI-2-3)

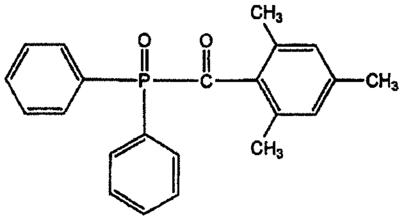

(PPI-2-4)

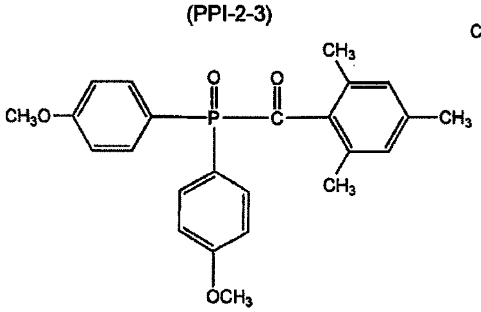

(PPI-2-5)

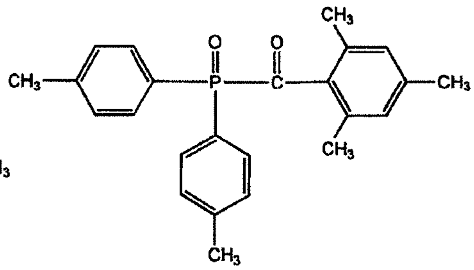

(PPI-2-6)

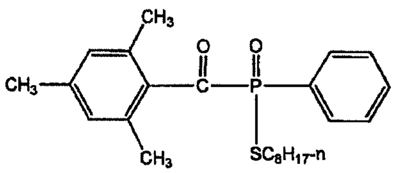

(PPI-2-7)

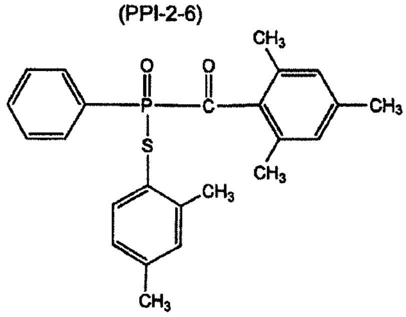

(PPI-2-8)

The compounds expressed by General Formulae (PPI-1) and (PPI-2) can be obtained from BASF Japan.

According to the invention, the content of the photopolymerization initiator expressed by General Formula (PPI-1) or (PPI-2) is preferably 0.1 parts by mass to 20 parts by mass, more preferably 0.1 parts by mass to 10 parts by mass, and particularly preferably 0.5 parts by mass to 5 parts by mass with respect to 100 parts by mass of the total solid content of the composition for forming the ion exchange film.

According to the invention, together with the photopolymerization initiator, a radical polymerization initiator expressed by General Formula (AZI) below that radically generates heat and light is preferably contained.

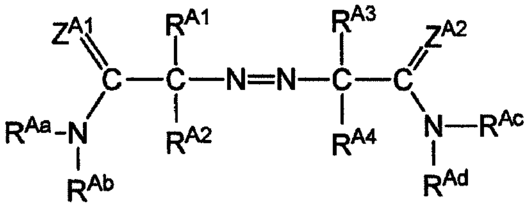

General Formula (AZI)

In General Formula (AZI), each of $Z^{A1}$ and $Z^{A2}$ independently represents =O or =N-$R^{Ae}$. Each of $R^{A1}$ to $R^{A4}$ independently represents an alkyl group. Each of $R^{Aa}$ to $R^{Ae}$ independently represents a hydrogen atom or an alkyl group. At least 2 of $R^{Aa}$, $R^{Ab}$, and $R^{Ae}$, at least 2 of $R^{Ac}$, $R^{Ad}$, and $R^{Ae}$, and/or at least 2 of $R^{Aa}$, $R^{Ac}$, and $R^{Ad}$ may be bonded to each other to form rings.

The alkyl groups in $R^{A1}$ to $R^{A4}$ preferably has 1 to 8 carbon atoms and more preferably has 1 to 4 carbon atoms, and methyl is particularly preferable.

$R^{Aa}$ to $R^{Ad}$ are preferably hydrogen atoms and an alkyl group having 1 to 8 carbon atoms.

The ring formed by $R^{Aa}$ and $R^{Ab}$, $R^{Ac}$ and $R^{Ad}$ , $R^{Aa}$ and $R^{Ac}$, and $R^{Ab}$ and $R^{Ad}$ bonded to each other is preferably a 5- or 6-membered ring.

The ring formed by $R^{Aa}$ and $R^{Ae}$, and $R^{Ac}$ and $R^{Ae}$ bonded to each other is particularly preferably an imidazoline ring, and, as the ring formed by $R^{Aa}$ and $R^{Ab}$, and $R^{Ac}$ and $R^{Ad}$ bonded to each other, and a pyrrolidine ring, a piperidine ring, a piperazine ring, a morpholine ring, and a thiomorpholine ring are particularly preferable.

$Z^{A1}$ and $Z^{A2}$ are preferably =N-$R^{Ae}$.

Hereinafter, specific examples of the radical polymerization initiator expressed by General Formula (AZI) are provided, but the invention is not limited thereto.

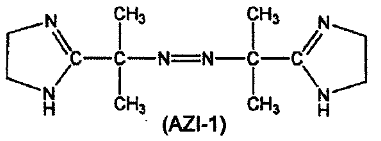

(AZI-1)

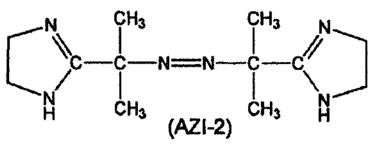

2HCl

(AZI-2)

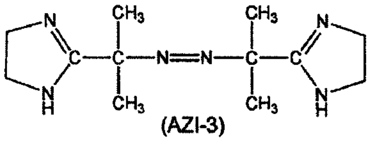

$2H_2SO_4$
$2H_2O$

(AZI-3)

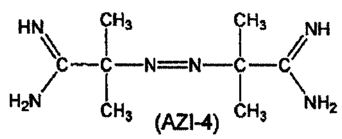

2HCl

(AZI-4)

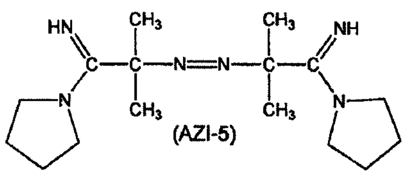

(AZI-5)

2HCl

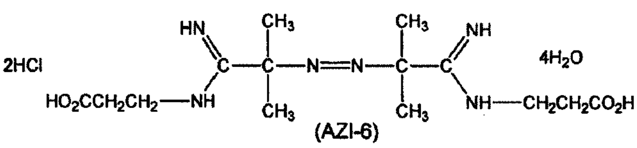

$4H_2O$

(AZI-6)

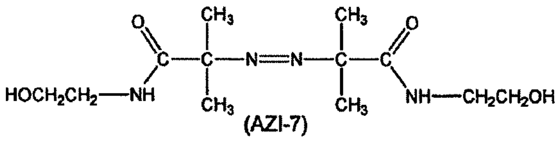

(AZI-7)

The radical polymerization initiator expressed by General Formula (AZI) can be obtained from Wako Pure Chemical Industries, Ltd., and, for example, an exemplary compound (AZI-1) is commercially available as VA-061, an exemplary compound (AZI-2) is commercially available as VA-044, an exemplary compound (AZI-3) is commercially available as VA-046B, an exemplary compound (AZI-4) is commercially available as V-50, an exemplary compound (AZI-5) is commercially available as VA-067, an exemplary compound (AZI-6) is commercially available as VA-057, and an exemplary compound (AZI-7) is commercially available as VA086 (all are product names).

According to the invention, the content of the radical polymerization initiator expressed by General Formula

(AZI) is preferably 0.1 parts by mass to 20 parts by mass, more preferably 0.1 parts by mass to 10 parts by mass, and particularly preferably 0.5 parts by mass to 5 parts by mass with respect to 100 parts by mass of the total solid content of the composition for forming the ion exchange film.

According to the invention, it is preferable that the radical polymerization initiator expressed by General Formula (AZI) above generates radicals by heating, and it is preferable that radical polymerization curing which is a post reaction is performed by heating after the photopolymerization curing reaction described above.

(Solvent)

The composition for forming the ion exchange film according to the invention may contain a solvent.

According to the invention, it is more preferable for increasing a charge density, as the content of the solvent in the composition for forming the ion exchange film is smaller. Therefore, the solubility to the reaction solvent for performing polymerization and curing becomes important.

According to the invention, the content of the solvent is preferably 5 parts by mass to 60 parts by mass and more preferably 10 parts by mass to 40 parts by mass with respect to 100 parts by mass of the total composition.

A uniform film can be produced by adjusting the content of the solvent in this range without an increase of viscosity of the composition. Moreover, pin holes (minute defective holes) are not generated.

The solvent having a solubility to water of 5% by mass or more is preferably used, and it is preferable that the solvent is freely mixed with water. Therefore, the solvent selected from water and a water-soluble solvent is preferable. As the water-soluble solvent, an alcohol-based solvent, an ether-based solvent which is an aprotic polar solvent, an amide-based solvent, a ketone-based solvent, a sulfoxide-based solvent, a sulfone-based solvent, a nitrile-based solvent, and an organic phosphorus-based solvent are particularly preferable. Water and alcohol-based solvent are preferable. Examples of the alcohol-based solvent include methanol, ethanol, isopropanol, n-butanol, ethylene glycol, propylene glycol, diethylene glycol, and dipropylene glycol. Among the alcohol-based solvents, ethanol, isopropanol, n-butanol, and ethylene glycol are more preferable, and isopropanol is particularly preferable. These solvents may be used singly or two or more types thereof may be used in combination. Use of water alone or water in combination with a water-soluble solvent is preferable. Use of water alone or water in combination with at least one of alcohol-based solvents is more preferable. With respect to the use of water in combination with the water-soluble solvent, isopropanol is preferably in the range of 0.1% by mass to 10% by mass, more preferably in the range of 0.5% by mass to 5% by mass, and further preferably in the range of 1.0% by mass to 2.0% by mass with respect to 100% by mass of water.

In addition, examples of the aprotic polar solvent which is a preferable solvent include dimethylsulfoxide, dimethylimidazolidinone, sulfolane, N-methylpyrrolidone, dimethylformamide, acetonitrile, acetone, dioxane, tetramethyl urea, hexamethyl phosphoramide, pyridine, propionitrile, butanone, cyclohexanone, tetrahydrofuran, tetrahydropyran, ethylene glycol diacetate, and γ-butyrolactone, and among these, dimethylsulfoxide, N-methylpyrrolidone, dimethylformamide, dimethylimidazolidinone, sulfolane, acetone or acetonitrile, and tetrahydrofuran are preferable. The solvents may be used singly or two or more types thereof may be used in combination.

(Polymerization inhibitor)

It is preferable to cause the composition for forming the ion exchange film according to the invention to contain a polymerization inhibitor in order to provide stability to the coating liquid when the ion exchange film is formed.

As the polymerization inhibitor, well-known polymerization inhibitors can be used. Examples thereof include a phenol compound, a hydroquinone compound, an amine compound, a mercapto compound, and a nitroxyl radical compound.

Examples of the phenol compound include a hindered phenol (phenol having a t-butyl group in an ortho position, and representatively 2,6-di-t-butyl-4-methylphenol), and bisphenol. Specific examples of the hydroquinone compound include monomethyl ether hydroquinone. Specific examples of the amine compound include N-nitroso-N-phenyl hydroxylamine, and N,N-diethylhydroxylamine. Specific examples of the nitroxyl radical compound include 4-hydroxy TEMPO (4-hydroxy-2,2,6,6-tetramethylpiperidine 1-oxyl free radical).

In addition, these polymerization inhibitors may be used singly or two or more types thereof may be used in combination.

A content of the polymerization inhibitor is preferably 0.01 parts by mass to 5 parts by mass, more preferably 0.01 parts by mass to 1 part by mass, and further preferably 0.01 parts by mass to 0.5 parts by mass with respect to 100 parts by mass of the total solid content in the composition for forming the ion exchange film.

(Other components)

The composition for forming the ion exchange film according to the invention may include a surfactant, a polymer

dispersing agent, a crater inhibitor, and the like, in addition to the components described above.

[Surfactant]

In order to adjust film physical properties, various polymer compounds may be added to the composition for forming the ion exchange film according to the invention. As the polymer compounds, an acrylic polymer, a polyurethane resin, a polyamide resin, a polyester resin, an epoxy resin, a phenol resin, a polycarbonate resin, a polyvinyl butyral resin, a polyvinyl formal resin, shellac, a vinylic resin, an acrylic resin, a rubber-based resin, waxes, and another natural resin can be used. In addition, two or more types thereof may be used in combination.

Moreover, a nonionic surfactant, a cationic surfactant, an organic fluoro surfactant, or the like may be added in order to adjust liquid physical properties.

Specific examples of the surfactant include an anionic surfactant such as an alkylbenzene sulfonic acid salt, an alkylnaphthalene sulfonic acid salt, a higher fatty acid salt, a sulfonic acid salt of higher fatty acid ester, a sulfuric acid ester salt of higher alcohol ether, a sulfonic acid salt of higher alcohol ether, an alkylcarboxylic acid salt of higher alkylsulfone amide, and an alkylphosphoric acid salt, and a nonionic surfactant such as polyoxyethylene alkyl ether, polyoxyethylene alkyl phenyl ether, polyoxyethylene fatty acid ester, sorbitan fatty acid ester, an ethylene oxide adduct of acetylene glycol, an ethylene oxide adduct of glycerin, and polyoxyethylene sorbitan fatty acid ester. Other examples thereof include an amphoteric surfactant such as an alkyl betaine or an amide betaine, a silicone-based surfactant, and a fluorine-based surfactant. The surfactant can be suitably selected from the surfactant well-known in the art and derivatives thereof.

[Polymer dispersing agent]

The composition for forming the ion exchange film of the invention may contain a polymer dispersant.

Specific examples of the polymer dispersant include polyvinyl pyrrolidone, polyvinyl alcohol, polyvinyl methyl ether, polyethylene oxide, polyethylene glycol, polypropylene glycol, and polyacryl amide. Among these, it is preferable to use polyvinyl pyrrolidone.

[Crater inhibitor]

A crater inhibitor is also referred to as a surface conditioner, a levelling agent, or a slipping agent and prevents unevenness on a film surface, and examples thereof include a compound in the structure of organomodified polysiloxane (mixture of polyether siloxane and polyether), a polyether-modified polysiloxane copolymer, and a silicon-modified copolymer.

Examples of the commercially available products include Tego Glide 432, Tego Glide 110, Tego Glide 130, Tego Glide 406, Tego Glide 410, Tego Glide 411, Tego Glide 415, Tego Glide 420, Tego Glide 435, Tego Glide 440, Tego Glide 450, Tego Glide 482, Tego Glide A115, Tego Glide B1484, and Tego Glide ZG400 (all are product names), manufactured by Evonik industries GmbH.

The content of the crater preventive is preferably 0 parts by mass to 10 parts by mass, more preferably 0 parts by mass to 5 parts by mass, and further preferably 1 part by mass to 2 parts by mass with respect to 100 parts by mass of the total solid content in the composition for forming the ion exchange film.

In addition to the above, the composition for forming the ion exchange film according to the invention may contain, for example, a viscosity improver or a preservative, if necessary.

<Production method for polymer according to the invention>

In the production of the polymer according to the invention, the composition for forming the ion exchange film according to the invention is photopolymerized and cured.

It is preferable that, after the photopolymerization curing reaction in presence of the radical polymerization initiator expressed by General Formula (AZI), and post reaction is performed by heating, so as to complete polymerization curing reaction.

In the production of the ion exchange film according to the invention, the monofunctional monomer expressed by General Formula (MI-a) or (MII-a) and the crosslinking monomer expressed by General Formula (MI-b) or (MII-b) are polymerized and cured in combination according to the invention.

Generally, reaction is performed by heating in presence of the radical polymerization initiator. However, according to the invention, reaction is performed by irradiation with an energy ray in presence of a photopolymerization initiator.

According to the invention, it is preferable that the composition for forming the ion exchange film which contains

the photopolymerization initiator expressed by General Formula (PPI-1) or (PPI-2) is cured and reacted and is caused to form a flm.

It is preferable that the composition for forming the ion exchange film further contains a radical polymerization initiator expressed by General Formula (AZI). Accordingly, after the photoradical polymerization curing reaction, as the post reaction, radical polymerization is performed, so as to adjust the polymerization degree of the polymerization reaction or complete the polymerization reaction. As long as the azo-based polymerization initiator includes an aromatic ring, radicals are generated by light or heat, but according to the invention, it is preferable that reaction is performed by heat, that is, by heating.

Specifically, according to the invention, as described above, reaction is preferably performed in the solvent, and the content of the solvent is preferably 5 parts by mass to 60 parts by mass and more preferably 10 parts by mass to 40 parts by mass with respect to 100 parts by mass which is the total mass of the composition for forming the ion exchange film.

In addition, the solvent is preferably water or a water-soluble solvent and is preferably cured and reacted after the support is coated and/or impregnated with the composition for forming the ion exchange film. Further, the curing reaction described above is preferably curing reaction in which the composition for forming the ion exchange film is irradiated with an energy ray and is heated, so as to be polymerized. Further, the heating is preferably performed on the film formed by irradiation with an energy ray.

The heating temperature according to the invention is preferably 40°C to 120°C, more preferably 60°C to 100°C, and particularly preferably 75°C to 90°C. In addition, the heating time in the case where heating is performed after irradiation with an energy ray is preferably 1 minute to 12 hours, more preferably 1 minute to 8 hours, and particularly preferably 1 minute to 6 hours.

The production method for of the polymer according to the invention is described in detail in the production method for the ion exchange film described below.

<Support>

In order to provide the film having satisfactory mechanical strength, a support can be used as a reinforcing material of the film, and according to the invention, a porous support (hereinafter, referred to as a "porous support") is be used. The porous support can configure a portion of the film by being coated and/or impregnated with the composition described above and being subjected to the curing reaction.

Examples of the porous support as the reinforcing material include synthetic woven fabric, a synthetic nonwoven fabric, a sponge-shaped film, or a film having fine through holes. Examples of the material for forming the porous support according to the invention may include a porous film based on polyolefin (polyethylene, polypropylene, and the like), polyacrylonitrile, polyvinyl chloride, polyester, polyamide, and copolymers thereof; or porous films based on polysulfone, polyether sulfone, polyphenylenesulfone, polyphenylenesulfide, polyimide, polyethermide, polyamide, polyamideimide, polyacrylonitrile, polycarbonate, polyacrylate, cellulose acetate, polypropylene, poly(4-methyl-1-pentene), polyvinylidene fluoride, polytetrafluoroethylene, polyhexafluoropropylene, polychlorotrifluoroethylene, and copolymers thereof. Among these, according to the invention, polyolefin is preferable.

Commercially available porous supports and reinforcing materials are marketed, for example, from Japan Vilene Company. Ltd., Freudenberg Filtration Technologies SE & Co. KG (Novatexx material), and Sefar AG. In an aspect in which the porous reinforcing material is used in the composition for forming the ion exchange film before curing, it is preferable that the porous reinforcing material can allow the wavelength in irradiation in the curing reaction to pass through, and/or can penetrate the porous reinforcing material such that the composition for forming the ion exchange film is cured in a step (ii) described below.

The porous support preferably has hydrophilicity. Therefore, a general method such as a corona discharge treatment, an ozone treatment, a sulfuric acid treatment, and a silane coupling agent treatment can be used as means for providing hydrophilicity to the support.

[Production method for ion exchange film]

Hereinafter, the production method for an ion exchange film according to the invention is described in detail.

Examples of the production of the ion exchange film according to the invention include a method for forming the ion exchange film by coating a support with a coating liquid made of the composition for forming the ion exchange film according to the invention that has at least a monofunctional monomer expressed by General Formula (MI-a) or (MII-a) and the crosslinking monomer expressed by General Formula (MI-b) or (MII-b) and irradiating the coated support with active radiation.

In addition, the composition for forming the ion exchange film as described above is used as the composition for forming the ion exchange film according to the invention.

The temperature condition of polymerization for forming the ion exchange film according to the invention is not particularly limited, but the temperature is preferably -30°C to 100°C, more preferably -10°C to 80°C, and particularly preferably 5°C to 60°C.

According to the invention, gas such as the air or oxygen may coexist at the time of forming the film, but it is preferable that the film is formed under inert gas atmosphere.

The composition of the invention can be applied to the porous support layer in an arbitrary but appropriate method, for example, curtain coating, extrusion coating, air-knife coating, slide coating, nip roll coating, forward roll coating, reverse roll coating, dip coating, kiss coating, rod bar coating, or spray coating. The coating of multiple layers can be done simultaneously or consecutively. For simultaneous coating of multiple layers, curtain coating, slide coating, slot die coating, and extrusion coating are preferable.

Accordingly, in a preferable method, the composition is continuously applied to a moving support, and in a more preferable method, the production is performed by a producing unit including a composition coating portion, an irradiation source for curing the composition, a film collecting portion, and means for moving the support from the composition coating portion to the irradiation source and the film collecting portion.

According to the invention, the ion exchange film is created by passing through processes of (i) coating and/or impregnating the porous support with the composition for forming the ion exchange film according to the invention, (ii) curing and reacting the composition by light irradiation and heating in addition to the light irradiation, and (iii) removing the film from the support as desired.

In addition, in (ii), the heating may be performed at the same time of the light irradiation or may be performed on the film after forming by light irradiation.

[Irradiation with an energy ray]

The coating portion of the composition for forming the ion exchange film can be disposed at the position on the upper stream with respect to the irradiation source, and the irradiation source is disposed at the position on the upper stream with respect to a complex film collecting station.

In order to have fluidity sufficient for performing coating with a high-speed coating machine, the viscosity of the composition for forming the ion exchange film measured at 35°C is preferably less than 4,000 mPa·s, more preferably 1 mPa·s to 1,000 mPa·s, and most preferably 1 mPa·s to 500 mPa·s. In the case of a coating method such as slide bead coating, the viscosity measured at 35°C is preferably 1 mPa·s to 100 mPa·s.

If an appropriate coating technique is used, the support moving at a speed of greater than 15 m/min, for example, at a speed of greater than 20 m/min, can be coated with the composition for forming the ion exchange film. Otherwise, the speed may reach, for example, 60 m/min, 120 m/min, or the maximum of 400 m/min.

Particularly, for the purpose of providing mechanical strength of the support and the film, for example, in order to improve the wettability and adhesion strength of the support, it is preferable that a treatment such as a corona discharge treatment, a glow discharge treatment, a flame treatment, and an ultraviolet irradiation treatment is performed on the support before coating.

In the curing reaction by radical polymerization, curing is performed quickly by performing heating in addition to the light irradiation and the light irradiation such that an ion exchange film can be formed, for example, within 30 seconds.

The curing due to the light irradiation of the composition for forming the ion exchange film is preferably performed within 60 seconds, more preferably performed within 15 seconds, particularly preferably performed within 5 seconds, and most preferably performed within 3 seconds after the support is coated with the composition for forming the ion exchange film.

The light irradiation time is preferably less than 10 seconds, more preferably less than 5 seconds, particularly preferably less than 3 seconds, and most preferably less than 2 seconds. In the continuous method, irradiation is continuously performed, curing reaction time can be determined depending on the speed at which the composition for forming the ion exchange film passes through the irradiation beam and moves.

When ultraviolet light (UV light) having high intensity is used for the curing reaction, a considerable amount of heat may be generated. Therefore, in order to prevent overheating, cooling air is preferably used for a lamp and/or the support/film. Frequently, a significant dose of IR light is applied together with the UV light. Therefore, it is preferable to apply the UV light from which IR light is cut by using a filter of an IR reflective quartz plate.

It is preferable to use infrared light in the curing. A preferable irradiation wavelength is preferably an absorption wavelength that is absorbed by an arbitrary photopolymerization initiator, and, for example, UV-A (400 nm to 320 nm), UV-B (320 nm to 280 nm), and UV-C (280 nm to 200 nm) are preferable.

Examples of the ultraviolet light source include a mercury arc lamp, a carbon arc lamp, a low pressure mercury lamp, a medium pressure mercury lamp, a high pressure mercury lamp, a swirl-flow plasma arc lamp, a metal halide lamp, a xenon lamp, a tungsten lamp, a halogen lamp, laser, and an ultraviolet light-emitting diode. Ultraviolet light emitting lamps of the medium or high pressure mercury vapor type is particularly preferable. In addition, in order to

modify an emission spectrum of the lamp, an additive such as metal halide may exist. In general cases, a lamp having maximum light emission in a range of 200 nm to 450 nm is particularly appropriate.

The energy output of the irradiation source is preferably from 20 W/cm to 1,000 W/cm and more preferably from 40 W/cm to 500 W/cm, the exposure dose can be higher or lower than the range above, if necessary. The curing degree of the obtained ion exchange film can be controlled by adjusting the exposure dose. The exposure dose is measured by High Energy UV Radiometer (UV Power Puck™ manufactured by EIT-Instrument Markets) in the UV-A range indicated in this device, and is preferably 40 $mJ/cm^2$ or greater, more preferably 100 $mJ/cm^2$ to 2,000 $mJ/cm^2$, and particularly preferably 150 $mJ/cm^2$ to 1,500 $mJ/cm^2$. The exposure time can be freely chosen, but is preferably shorter and typically less than 2 seconds.

When the coating speed is high, in order to cause the exposure strength to reach a desired level, it is preferable to use plural irradiation sources. The exposure doses of these irradiation sources may be identical to or different from each other.

<Characteristics of ion exchange film>

The ideal ion exchange film has low film resistance, low water permeability, and a high transportation rate (cation/anion exchanging separation selectivity). As the charge density per a unit structure molecular weight is higher, the resistance in the film generally decreases, the transportation rate increases, and crosslinking density increases, such that water permeability can be decreased.

According to the invention, the pore volume ratio of the film is preferably 0% to 2%, more preferably 0% to 1%, and particularly preferably 0% to 0.1%.

The pore volume ratio of the film can be adjusted by a solid content concentration of the coating liquid or the coating solvent.

If the pore volume ratio of the film is in the range described above, a function of preventing free transmission of ions and water is generated, and low film resistance and low water permeability are compatible with each other. Therefore, it is preferable that the pore volume ratio of the film is in the range described above.

Here, the expression "pore volume fraction" refers to a value calculated from the following Formula (b) when electric resistance of the ion exchange film (hereinafter, referred to simply as "film" in some cases) in NaCl solutions having five different concentrations is measured, electrical conductivity of the film upon immersing the film into the NaCl solution of each concentration is taken as A ($S/cm^2$), electrical conductivity per unit film thickness in the NaCl solution of each concentration is taken as B ($S/cm^2$), and a y-intercept upon A on a y-axis and B on an x-axis is taken as C.

$$\text{Pore volume ratio} = (A-C)/B \qquad \text{(b)}$$

The pores according to the invention are smaller than the detection limit of a typical scanning electron microscope (SEM) and cannot be detected even if Jeol JSM-6335F which is a field emission-type SEM having a detection limit of 5 nm is used, and thus it is considered that an average pore size is less than 5 nm.

In addition, since the pores are smaller than the detection limit of the SEM, the pores can be considered as gaps between atoms. Further, the "pores" are used as a meaning including the gaps between atoms.

It is considered that these pores are formed by a solvent, neutralized water, or a salt in the composition at the time of curing the composition for forming the ion exchange film, or shrinkage at the time of curing the composition.

These pores are a void portion in an arbitrary shape, existing inside the ion exchange film, and include both of independent holes and continuous holes. The "independent holes" mean pores independent to each other and may be in contact with an arbitrary surface of the film. Meanwhile, the "continuous holes" mean pores in which independent holes are connected to each other. The continuous holes may be micropores that may be continued from an arbitrary surface of the film to other surfaces in a passage shape.

The ion exchanging capacity of the ion exchange film according to the invention is preferably 2.5 meq/g or greater, more preferably 3.0 meq/g or greater, and further preferably 4.0 meq/g or greater with respect to the total dry mass of the porous support having the ion exchange film. In addition, the upper limit is not particularly limited, but preferably 9.0 meq/g or lower.

The charge density of the ion exchange film according to the invention is preferably 3.0 $meq/m^2$ or greater, more preferably 3.5 $meq/m^2$ or greater, and particularly preferably 4.2 $meq/m^2$ or greater with respect to the area of a dry film. The upper limit is not particularly limited, but preferably 9.0 $meq/m^2$ or lower.

The permselective properties with respect to an anion such as $Cl^-$ of the ion exchange film (anion exchanging film) according to the invention is preferably greater than 0.90, more preferably greater than 0.93, particularly preferably greater than 0.95, and comes extremely close to 1.0 of a theoretical value which is an ideal value.

The electric resistance (film resistance) of the ion exchange film according to the invention is preferably less than 2 $\Omega \cdot cm^2$, more preferably less than 1.5 $\Omega \cdot cm^2$, and particularly preferably less than 1.3 $\Omega \cdot cm^2$. The lower electric resistance is preferable, and if the electric resistance is the lower limit in the realizable range, it is preferable for achieving the effect of the invention. The lowest value of the electric resistance (film resistance) is not particularly limited, but a value of 0.1 $\Omega \cdot cm^2$ or greater is realistic.

A swelling ratio (a dimensional change rate due to swelling) of the ion exchange film according to the invention in water is preferably less than 30%, more preferably less than 15%, and particularly preferably less than 8%. The swelling ratio can be controlled by adjusting the reaction condition in the curing reaction.

The ion exchanging capacity, the electric resistance, and the permselective properties, and the swelling ratio percentage in water can be measured by the method disclosed in Membrane Science, 319, 217 to 218 (2008), written by Nakagaki Masayuki, a hymenology experimental method, pages 193 to 195 (1984).

The water permeability of the ion exchange film according to the invention is preferably 15 $\times$ $10^{-5}$ ml/m$^2$/Pa/hr or lower, more preferably 10 $\times$ $10^{-5}$ ml/m$^2$/Pa/hr or lower, and particularly preferably 8 $\times$ $10^{-5}$ ml/m$^2$/Pa/hr or lower. The lower limit of the water permeability is not particularly limited, but 0.5 $\times$ $10^{-5}$ml/m$^2$/Pa/hr or higher is realistic.

In addition, the water permeability can be obtained by a method described in an example.

[Separation film module·ion exchange device]

The ion exchange film according to the invention is a composite film obtained by combining a porous support, and it is preferable to form a separation film module in which the composite film is used. In addition, an ion exchange device having means for performing ion exchanging, desalinization, and refinement can be formed by using an ion exchange film, a composite film, or an ion exchange film module of the invention. The ion exchange film according to the invention can be very appropriately used as a fuel cell.

The ion exchange film according to the invention can be modularized and appropriately used. Examples of the module include a spiral-type module, a hollow fiber-type module, a pleat-type module, a tubular-type module, a plate and frame-type module, and a stack-type module.

Examples

Hereinafter, the invention is described in more detail with reference to examples, but the invention is not limited to these examples. Unless described otherwise, "part(s)" and "percent (%)" are on a mass basis.

[Synthesization of styrene-based crosslinking agent]

(Synthetic example 1)

1,4-diazabicyclo[2.2.2]octane (1.00 mol) was added to the mixture solution of 321 g of chloromethylstyrene (2.10 mol, manufactured by AGC Seimi Chemical Co., Ltd., Product name: CMS-P), 1.30 g of 2,6-di-tert-butyl-4-methylphenol, and 433 g of acetonitrile, and heating and stirring were performed at 80°C for 15 hours.

The generated crystals were filtrated, so as to obtain 405 g of an exemplary compound (CL-1) (yield ratio of 97%), as white crystals.

(Synthetic example 2)

130 g of N,N,N',N'-tetramethyl-1,3-diaminopropane (1.00 mol) was added to the mixture solution of 458 g of chloromethylstyrene (3.00 mol, manufactured by AGC Seimi Chemical Co., Ltd., Product name: CMS-P), 1.85 g of 2,6-di-tert-butyl-4-methylphenol, 1,232 g of nitrobenzene, and heating and stirring were performed at 80°C for 20 hours.

The generated crystals were filtrated, so as to obtain 218 g of an exemplary compound (CL-2) (yield ratio of 50%), as white crystals.

(Synthetic example 3)

313 g of N-[3-(dimethylaminopropyl)acrylamide] (2.00 mol) was added to the mixture solution of 175 g of paradichloroxylene (1.00 mol), 1,220 g of acetonitrile, 244 g of methanol, and 1 g of tert-butylhydroperoxide, and heating and stirring were performed at 50°C for 2 hours. Subsequently, 1,220 g of acetone was added, stirring was performed at room temperature for 1 hour, and the generated crystals were filtrated, so as to obtain 450 g of an exemplary compound (CL-3) (yield ratio of 92%) as white crystals.

In the examples, the following compounds were used respectively.

With respect to a monofunctional monomer, the monomer (M-1) (manufactured by Sigma-Aldrich Co. LLC.) was used as the monofunctional monomer expressed by General Formula (MI-a), and BLEMMER QA (M-2) or N,N'-dimethylaminopropyl acrylamide (M-3, manufactured by Wako Pure Chemical Industries, Ltd.) was used as the monofunctional monomer expressed by General Formula (MII-a). In addition, a comparative monofunctional monomer (M-4) was used as a monomer for comparison.

As the crosslinking monomer, synthesized compounds (CL-1), (CL-2), and (CL-3), N,N'-(1,2-dihydroxyethylene)bisacrylamide (CL-4), a polyethylene glycol diacrylate (CL-5), dipentaerythritol hexaacrylate (CL-6), or a compound disclosed in JP2012-206992A (CL-7) was used. In addition, comparative crosslinking monomers (CL-8) and (CL-9) for comparison were used.

As the compound expressed by General Formula (PPI-1), an exemplary compound (PPI-1-1) (manufactured by BASF Japan, Product name; Darocur 1173) or an exemplary compound (PPI-1-2) (manufactured by BASF Japan, Product name; Irgacure 2959) was used.

As the azo-based radical polymerization initiator expressed by General Formula (AZI), an exemplary compound (AZI-3) (manufactured by Wako Pure Chemical Industries, Ltd., Product name; VA-046B) was used.

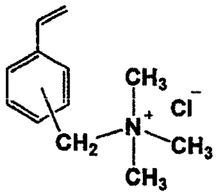

(M-1)

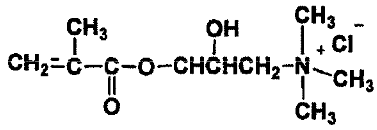

(M-2)

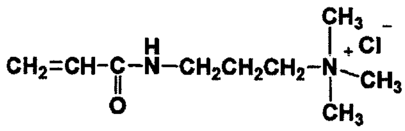

(M-3)

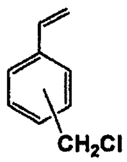

Comparative monofunctional monomer (M-4)

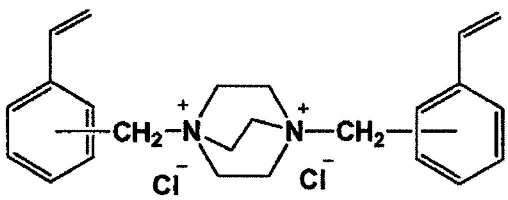

(CL-1)

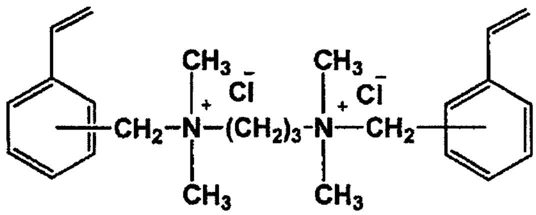

(CL-2)

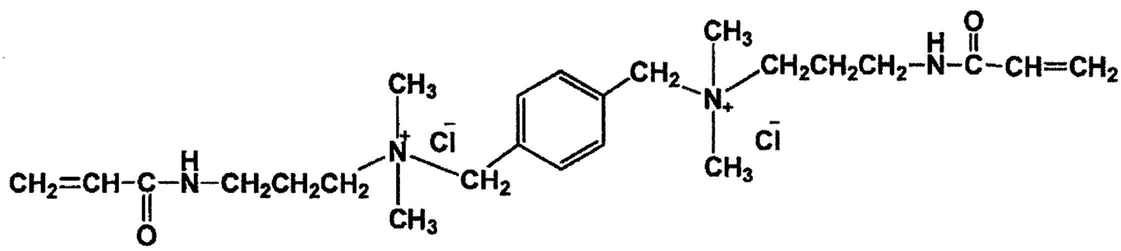

(CL-3)

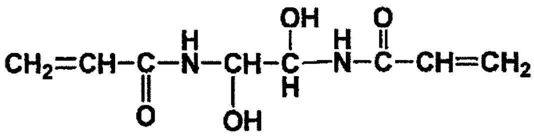

(CL-4)

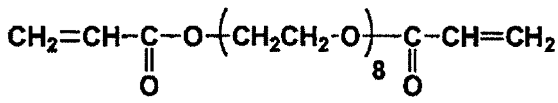

(CL-5)

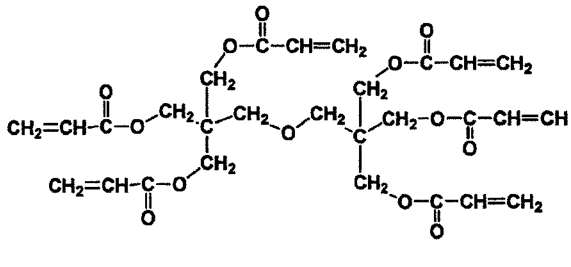

(CL-6)

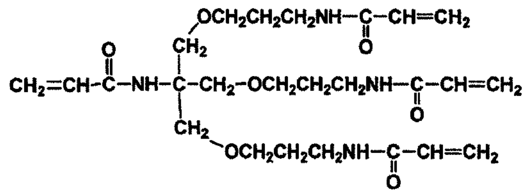

(CL-7)

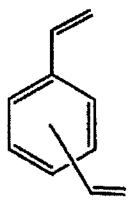

Comparative crosslinking monomer (CL-8)

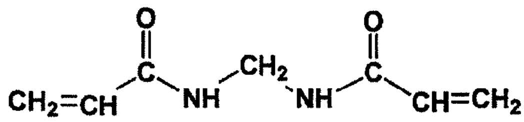

Comparative crosslinking monomer (CL-9)

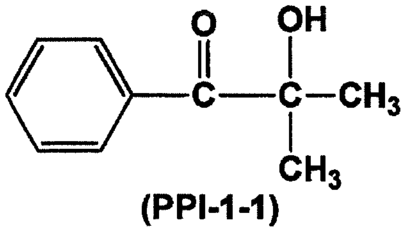

(PPI-1-1)

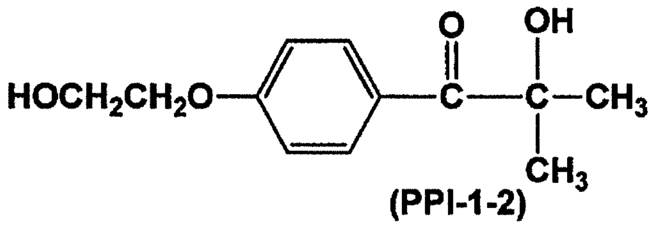

(PPI-1-2)

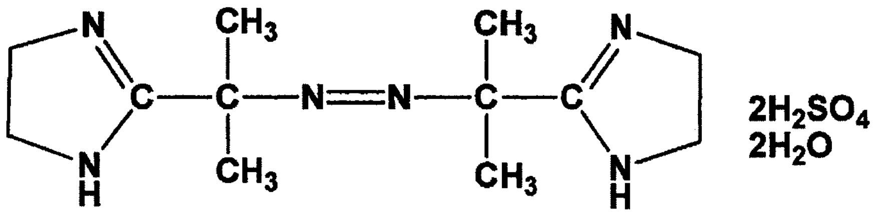

(AZI-3)

(Example 1)

(Creation of anion exchanging film)

An aluminum plate was manually coated with a coating liquid of a composition having a formulation shown in Table 1 below at a rate of approximately 5 m/min using a 150-μm wire-wound rod, and subsequently a nonwoven fabric (FO-2223-10 manufactured by Freudenberg & Co. KG, in thickness of 100 μm) was impregnated with the coating liquid. An excess coating liquid was removed using a rod around which no wire was wound. A temperature of the coating liquid at the time of coating was approximately 25°C (room temperature). Curing reaction of the coating liquid impregnated support was carried out by using a UV exposure device (manufactured by Fusion UV Systems, Model: Light Hammer

10, D-valve, conveyer speed: 9.5 m/min, 100% strength), so as to prepare an anion exchanging film. An exposure amount was 1,000 mJ/cm$^2$ in a UV-A region. The resultant film was removed from the aluminum plate, and stored in a 0.1 M NaCl solution for at least 12 hours. The thickness of the obtained film was 134 $\mu$m.

(Examples 2 to 10 and Comparative Examples 2 and 3)

Respective anion exchanging films of Examples 2 to 10 and Comparative Examples 2 and 3 were created in the same manner as in Example 1 except that the formulation in the creation of the anion exchanging film of Example 1 was changed to formulations shown in Table 1 below.

(Comparative Example 1)

A film was formed in the same manner as in Example 1, except that the formulation was changed to a formulation shown in Table 1 below, and a polymerization condition was changed to a condition shown in Table 2 below. Subsequently, the film obtained by immersing in a 0.5 mol/L of trimethylamine hydrochloride aqueous solution (prepared to pH 12) at 40°C for 6 hours was removed from an aluminum plate, and stored in a 0.1 M NaCl solution for at least 12 hours.

In Comparative Example 1, a quaternary amination reaction was separately carried out after the polymerization curing reaction. In this manner, a step of carrying out quaternary amination in addition to the polymerization curing reaction was shown in Table 2 below as an ionization step.

(Comparative Example 4)

According to a method disclosed in JP2013-513623A (WO2013/011273A), an aqueous solution (200 ml) of 10 g (0.047 mol) of the monofunctional monomer (M-1), 8.0 g (0.050 mol) of a comparative crosslinking monomer (CL-10) below, 3.0 g (0.020 mol) of the comparative crosslinking monomer (CL-9), and 1.0 g (0.0045 mol) of Irgacure 2959 as the polymerization initiator was immersed in polyether sulfone, as a porous substrate, drying was carried out, and exposure with an electron beam was performed, so as to obtain an ion exchanged laminate film.

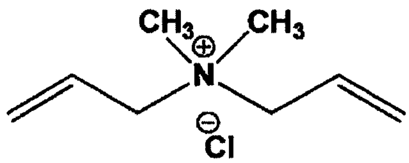

Comparative crosslinking monomer (CL-10)

(Comparative Example 5)

According to a method disclosed in paragraphs 0024 to 0025 of JP1994-73206A (JP-H06-73206A), an amphiphilic compound (W-1) below (30 mol) and a comparative crosslinking monomer (CL-11) below (30 mol) and an aqueous dispersion to which 4-(2-hydroxyethoxy)phenyl-(2-hydroxy-2-propyl)ketone was added as the polymerization initiator were developed on porous polytetrafluoroethylene, and irradiation with ultraviolet ray was carried out, so as to obtain an ion exchanged laminate film.

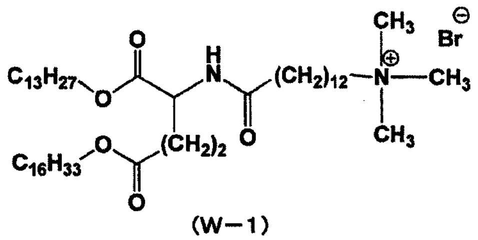

(W−1)

$(CH_2=CH-CH_2)_4N^{\oplus}\ Br^{\ominus}$

Comparative crosslinking monomer (CL-11)

[Table 1]

| Type | Used material | Example 1 | Example 2 | Example 3 | Example 4 | Example 5 | Example 6 | Example 7 | Example 8 | Example 9 | Example 10 | Comparative Example 1 | Comparative Example 2 | Comparative Example 3 |
|---|---|---|---|---|---|---|---|---|---|---|---|---|---|---|
| Monomer | M-1 | 23.2 | 23.2 | 23.2 | 23.2 | 23.2 | | | | | 10.0 | | | |
| | M-2 | | | | | | 23.2 | 23.2 | | | | | | 23.2 |
| | M-3 | | | | | | | | 23.2 | 23.2 | | | 23.2 | |
| | M-4 | | | | | | | | | | | 23.2 | | |
| Crosslinking agent | CL-1 | | | | | | 46.1 | | 46.1 | | 13.2 | | | |
| | CL-2 | | | | | | | 46.1 | | 46.1 | | | | |
| | CL-3 | 46.1 | | | | | | | | | 46.1 | | | 46.1 |
| | CL-4 | | 46.1 | | | | | | | | | | | |
| | CL-5 | | | 46.1 | | | | | | | | | | |
| | CL-6 | | | | 46.1 | | | | | | | | | |
| | CL-7 | | | | | 46.1 | | | | | | | | |
| | CL-8 | | | | | | | | | | | 46.1 | | |
| | CL-9 | | | | | | | | | | | | 46.1 | |
| Polymerization initiator | Irgacure 2959 | 0.5 | | 0.7 | | 0.7 | | 0.7 | | 0.7 | 0.7 | | 0.7 | |
| | Darocur 1173 | | 0.7 | | 0.5 | | 0.7 | | 0.7 | | | | | 0.7 |
| | VA-046B | 0.2 | | | 0.2 | | | | | | | 0.7 | | |
| Solvent | Water | 30 | 30 | 30 | 30 | 30 | 30 | 30 | 30 | 30 | 30 | 20 | 30 | 30 |
| | N-methylpyrrolidone | 0 | 0 | 0 | 0 | 0 | 0 | 0 | 0 | 0 | 0 | 10 | 0 | 0 |

[Table 2]

| | Curing method | Curing temperature | Time required for curing | Whether ionization step was performed |
|---|---|---|---|---|
| Example 1 | UV curing | 80°C | 5 min | Not performed |
| Example 2 | UV curing | 80°C | 5 min | Not performed |
| Example 3 | UV curing | 80°C | 5 min | Not performed |
| Example 4 | UV curing | 80°C | 3 min | Not performed |
| Example 5 | UV curing | 80°C | 3 min | Not performed |
| Example 6 | UV curing | 80°C | 8 min | Not performed |
| Example 7 | UV curing | 80°C | 1 min | Not performed |
| Example 8 | UV curing | 80°C | 10 min | Not performed |
| Example 9 | UV curing | 80°C | 5 min | Not performed |
| Example 10 | UV curing | 80°C | 5 min | Not performed |
| Comparative Example 1 | Thermal curing | 80°C | 8 hour | Performed |
| Comparative Example 2 | UV curing | 25°C | 1 min | Not performed |
| Comparative Example 3 | UV curing | 25°C | 1 min | Not performed |
| Comparative Example 4 | Electron beam | 25°C | 30 sec. | Not performed |
| Comparative Example 5 | UV curing | 25°C | 1 min | Not performed |

From the results of Table 2, in Examples 1 to 10 in which the regulations of the invention were satisfied, films were able to be formed for a short period of time. In contrast, the anion exchanging film of Comparative Example 1 in which the regulations of the invention were not satisfied required a long period of time for forming the film.

With respect to the anion exchanging film which was created with Examples 1 to 10 and Comparative Examples 1 to 5, the following items were evaluated.

The obtained results were collected and shown in Table 3 below.

[Water content (%)]

The water content (%) of the film was calculated by the following formula.

{(film mass after immersion for 15 hours in 0.5 M NaCl aqueous solution at 25°C) - (film mass after drying for 15 hours in vacuum oven at 60°C after immersion)}/(film mass after immersion for 15 hours in 0.5 M NaCl aqueous solution at 25°C) × 100

[Electric resistance ($\Omega \cdot cm^2$) of film]

Both sides of the film immersed into a 0.5 M NaCl aqueous solution for about 2 hours were wiped off using a dry filter paper, and the film was interposed between two chambers of a two-chamber-type cell (effective film area: 1 $cm^2$, Ag/AgCl reference electrodes (manufactured by Metrohm AG) were used as electrodes). Both chambers were filled with 100 mL of NaCl having the same concentration, and the cell was placed in a constant-temperature water bath at 25°C, and allowed to stand until the cell reached equilibrium. A liquid temperature in the cell exactly reached 25°C, and then electric resistance $r_1$ was measured using an alternative current bridge (frequency: 1,000 Hz). A NaCl concentration for measurement was adjusted to 0.5 M, 0.7 M, 1.5 M, 3.5 M, and 4.5 M, and measurement was carried out from a low concentration liquid in the concentration order. Next, the film was removed, and electric resistance $r_2$ between both electrodes was measured only with a 0.5 M NaCl aqueous solution to determine electric resistance r of the film from a difference: $r_1$ - $r_2$.

In Table 3 below, the "electric resistance of film" was simply referred to as "film resistance".

[Pore volume ratio (%) of film]

Electrical conductivity A ($S/cm^2$) of a film was calculated, according to Formula (a) below, from electric resistance R of the film as measured in the NaCl liquid of 0.5 M, 0.7 M, 1.5 M, 3.5 M, and 4.5 M.

$$A\ (S/cm^2) = 1/R \qquad \text{Formula (a)}$$

Subsequently, the electrical conductivity and the film thicknesses of the respective NaCl concentration solutions were measured, and electrical conductivity B ($S/cm^2$) per unit film thickness of the respective NaCl concentration solutions was calculated.

A y-intercept upon A on a y-axis and B on an x-axis is taken as C, and a pore volume ratio was calculated by Formula (b) below.

$$\text{Pore volume ratio} = (A\text{-}C)/B \qquad (b)$$

[Water permeability ($mL/m^2/Pa/hr$)]

Water permeability of the film was measured using a device having a flow channel 10 shown in Fig. 1. In Fig. 1, reference numeral 1 represents a film, and reference numerals 3 and 4 represent flow channels of a feed solution (pure water) and a draw solution (3 M NaCl), respectively. An arrow of reference numeral 2 shows a flow of water separated from the feed solution.

400 mL of feed solution and 400 mL of draw solution were brought into contact (film contact area of 18 $cm^2$) through the film, and each solution was allowed to flow at a flow rate of 0.11 cm/sec in a direction of an arrow of a reference numeral 5 using a Perista pump. A rate at which water in the feed solution permeates into the draw solution through the film was analyzed by measuring masses of the feed solution and the draw solution on a real time basis so as to obtain the water permeability.

[Pin hole test]

The film for measuring was coated with platinum (Pt) having the thickness of 1.5 nm and measured with a scanning electron microscope (SEM) in the following condition.

- Condition -

Acceleration voltage: 2 kV

Working distance: 4 mm

Aperture: 4

Magnification: × 100,000 times

Inclination of field of view: 3°

Evaluation of pin holes was carried out from an SEM picture, in view of the following.

A: A defect or a pin hole was not observed.

B: 1 to 2 of defects or pin holes were observed.

C: 3 or more of defects or pin holes were observed.

[Table 3]

| | Water content (%) | Film resistance ($\Omega\cdot cm^2$) | Water permeability ($ml/m^2/Pa/hr$) | (Film resistance) × (Water permeability) | Pore volume ratio (%) | Pin hole test |
|---|---|---|---|---|---|---|
| Example 1 | 32 | 0.9 | $5.5 \times 10^{-5}$ | $4.95\times10^{-5}$ | 0.11 | A |
| Example 2 | 33 | 1.0 | $5.4 \times 10^{-5}$ | $5.40\times10^{-5}$ | 0.08 | A |
| Example 3 | 35 | 0.9 | $7.1 \times 10^{-5}$ | $6.39\times10^{-5}$ | 0.10 | B |
| Example 4 | 29 | 1.1 | $5.0 \times 10^{-5}$ | $5.5\times10^{-5}$ | 0.06 | A |
| Example 5 | 25 | 1.5 | $4.5 \times 10^{-5}$ | $6.75\times10^{-5}$ | 0.07 | A |
| Example 6 | 41 | 0.7 | $9.0 \times 10^{-5}$ | $6.30\times10^{-5}$ | 0.11 | A |
| Example 7 | 28 | 1.2 | $5.9 \times 10^{-5}$ | $7.08\times10^{-5}$ | 0.09 | B |
| Example 8 | 36 | 1.0 | $7.5 \times 10^{-5}$ | $7.50\times10^{-5}$ | 0.10 | A |
| Example 9 | 25 | 1.6 | $4.4 \times 10^{-5}$ | $7.04\times10^{-5}$ | 0.08 | A |
| Example 10 | 15 | 1.4 | $3.8 \times 10^{-5}$ | $5.32\times10^{-5}$ | 0.04 | A |
| Comparative Example 1 | 15 | 3.5 | $7.5 \times 10^{-5}$ | $26.25\times10^{-5}$ | 0.5 | C |
| Comparative Example 2 | 41 | 1.3 | $12.4 \times 10^{-5}$ | $16.12\times10^{-5}$ | 1.3 | B |
| Comparative Example 3 | 49 | 2.1 | $8.0 \times 10^{-5}$ | $16.80\times10^{-5}$ | 0.7 | B |
| Comparative Example 4 | 21 | 2.3 | $8.4 \times 10^{-5}$ | $19.30\times10^{-5}$ | 1.3 | B |
| Comparative Example | 23 | 0.9 | $34.0\times10^{-5}$ | $30.60\times10^{-5}$ | 2.7 | C |

From the results of Table 3, the anion exchanging films of Examples 1 to 10 satisfying the regulations of the invention show low values of the products of the film resistance and the water permeability, and the anion exchanging films of Examples 1 to 10 are known to be high-performance anion exchanging films. In contrast, the anion exchanging film of Comparative Example 1 that does not satisfy the regulations of the invention particularly has great film resistance and products of the film resistance and the water permeability of Comparative Example 1 to 5 exhibit great values.

In this manner, it is found that the anion exchanging film according to the invention exhibits an excellent performance that may not be obtained in the ion exchange film in the related art.

Reference Numerals

1 film
2 arrow indicating water in feed solution penetrate draw solution through film
3 flow channel of feed solution
4 flow channel of draw solution
5 progress direction of liquid
10 flow channel of water permeability measuring device

**Claims**

1. An ion exchange film comprising:

at least one type of porous supports; and
a polymer resin disposed in pores of the porous support,

wherein the polymer resin contains a styrene-acryl copolymer having a structure expressed by at least one of General Formulae (PI) and (PII) below,

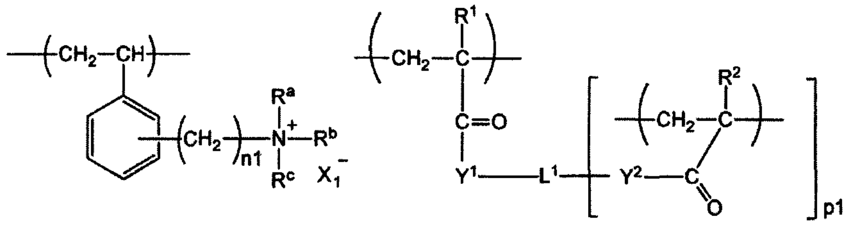

General Formula (PI)

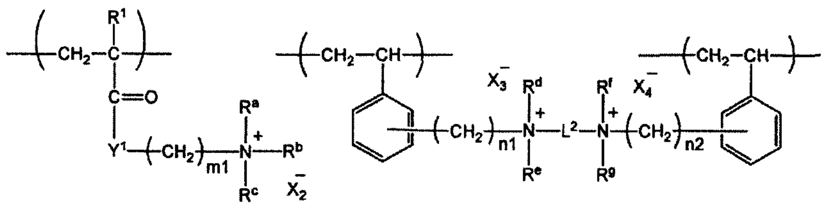

General Formula (PII)

in General Formulae (PI) and (PII), each of $R^1$ and $R^2$ independently represents a hydrogen atom or an alkyl group, each of $Y^1$ and $Y^2$ independently represents -O- or -N(Rx)-, here, Rx represents a hydrogen atom or an alkyl group, $L^1$ represents a p1 + 1-valent linking group having 2 or more carbon atoms, $L^2$ represents a bivalent linking group, p1 represents an integer of 1 or greater, each of n1, n2, and m1 independently represents an integer of 1 or greater, each of $R^a$ to $R^g$ independently represents an alkyl group or an aryl group, 2 or 3 of $R^a$ to $R^c$ may be bonded to each other to form a ring, 2 to 4 of $R^d$ to $R^g$ may be bonded to each other to form a ring, and each of $X_1^-$ to $X_4^-$ independently represents an organic or inorganic anion.

2. The ion exchange film according to claim 1,
wherein the polymer is made of a monomer component expressed by General Formula (MI-a) below and a crosslinking monomer component expressed by General Formula (MI-b) below or made of a monomer component expressed by General Formula (MII-a) below and a crosslinking monomer component expressed by General Formula (MII-b) below,

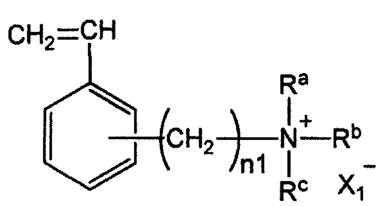

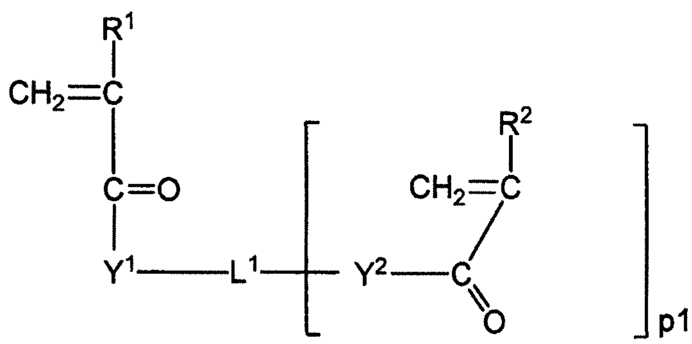

General Formula (MI-a)　　General Formula (MI-b)

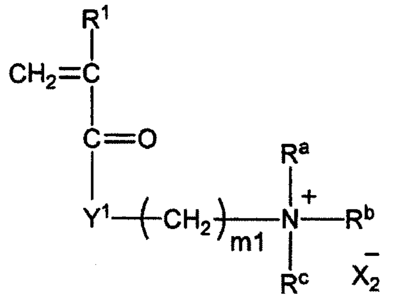

General Formula (MII-a)

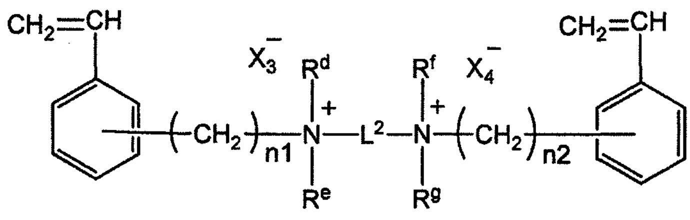

General Formula (MII-b)

in General Formulae (MI-a), (MI-b), (MII-a), and (MII-b), $R^1$, $R^2$, $Y^1$, $Y^2$, $L^1$, $L^2$, p1, n1, n2, m1, $R^a$ to $R^g$, and $X_1^-$ to $X_4^-$ have the same meaning as $R^1$, $R^2$, $Y^1$, $Y^2$, $L^1$, $L^2$, p1, n1, n2, m1, $R^a$ to $R^g$, and $X_1^-$ to $X_4^-$ in General Formulae (PI) and (PII), respectively.

**3.** The ion exchange film according to claim 1 or 2,
wherein a content of a component having a structure unit obtained from a styrene skeleton or having a styrene skeleton is 1 part by mass to 85 parts by mass in the case of General Formula (PI) above and 10 parts by mass to 90 parts by mass in the case of General Formula (PII) above with respect to 100 parts by mass of the polymer.

**4.** The ion exchange film according to any one of claims 1 to 3,
wherein the polymer is crosslinked and cured by photoradical polymerization.

**5.** The ion exchange film according to any one of claims 1 to 4,
wherein the porous support is a synthetic woven fabric, a synthetic nonwoven fabric, a sponge-shaped film, or a film having fine through holes, and
wherein the porous support is preferably polyolefin.

**6.** The ion exchange film according to any one of claims 1 to 5,
wherein a film thickness of the polymer resin is 40 μm to 500 μm.

**7.** A composition for forming an ion exchange film comprising:

a compound expressed by General Formula (MI-a) below and a compound expressed by General Formula (MI-b) below; or
a compound expressed by General Formula (MII-a) below and a compound expressed by General Formula (MII-b) below,

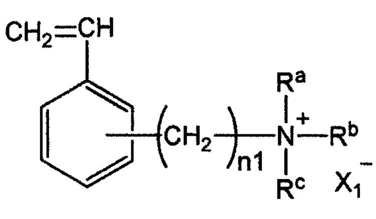

General Formula (MI-a)

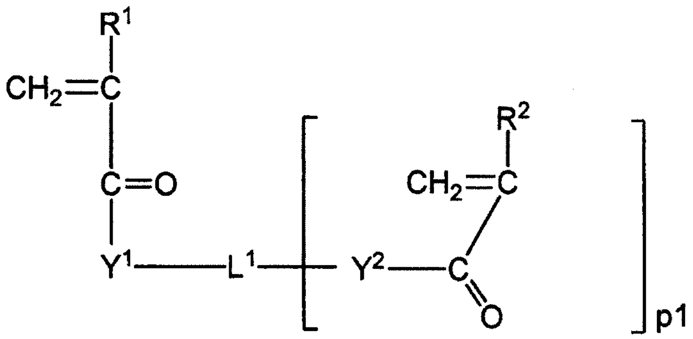

General Formula (MI-b)

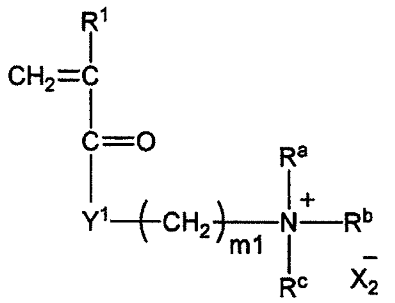

General Formula (MII-a)

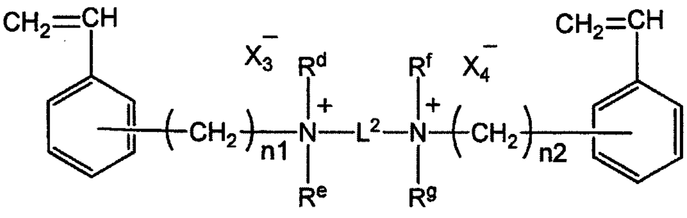

General Formula (MII-b)

in General Formulae (MI-a), (MI-b), (MII-a), and (MII-b), each of $R^1$ and $R^2$ independently represents a hydrogen atom or an alkyl group, each of $Y^1$ and $Y^2$ independently represents -O- or -N(Rx)-, here, Rx represents a hydrogen atom or an alkyl group, $L^1$ represents a p1 + 1-valent linking group having 2 or more carbon atoms, $L^2$ represents a bivalent linking group, p1 represents an integer of 1 or greater, each of n1, n2, and m1 independently represents an integer of 1 or greater, each of $R^a$ to $R^g$ independently represents an alkyl group or an aryl group, 2 or 3 of $R^a$ to $R^c$ may bonded to each other to form a ring, 2 to 4 of $R^d$ to $R^g$ may bonded to each other to form a ring, and each of $X_1^-$ to $X_4^-$ independently represents an organic or inorganic anion.

**8.** The composition for forming an ion exchange film according to claim 7, wherein a content of the compound having the styrene skeleton is 1 part by mass to 85 parts by mass in the case of the compound expressed by General Formula (MI-a) above and 10 parts by mass to 90 parts by mass in the case of the compound expressed by General Formula (MII-a) above with respect to 100 parts by mass of the total solid content of the composition.

**9.** The composition for forming an ion exchange film according to claim 7 or 8, wherein solubility of all the compounds having the ethylenically unsaturated groups is 30% by mass or more with respect to pure water at 25°C.

**10.** The composition for forming an ion exchange film according to any one of claims 7 to 9, further comprising:

a photopolymerization initiator expressed by General Formula (PPI-1) or (PPI-2) below,

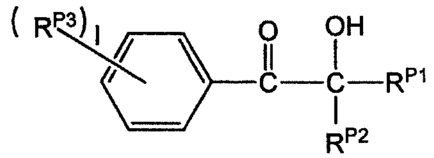

General Formula (PPI-1)

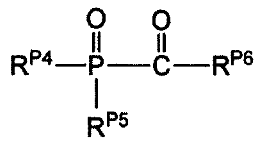

General Formula (PPI-2)

in General Formulae (PPI-1) and (PPI-2), each of $R^{P1}$ and $R^{P2}$ independently represents a hydrogen atom, an alkyl group, an alkoxy group, or an aryloxy group, $R^{P3}$ represents an alkyl group, an alkoxy group, or an aryloxy group, 1 represents an integer of 0 to 5, $R^{P4}$ represents an alkyl group, an aryl group, an alkylthio group, or an arylthio group, $R^{P5}$ represents an alkyl group, an aryl group, an alkylthio group, an arylthio group, or an acyl group, $R^{P6}$ represents an alkyl group or an aryl group, and $R^{P1}$ and $R^{P2}$ or $R^{P4}$ and $R^{P5}$ may be bonded to each other to form a ring,
wherein a content of the photopolymerization initiator is preferably 0.1 parts by mass to 20 parts by mass with respect to 100 parts by mass of the total solid content of the composition.

**11.** The composition for forming an ion exchange film according to claim 10, further comprising:

a radical polymerization initiator expressed by General Formula (AZI) below,

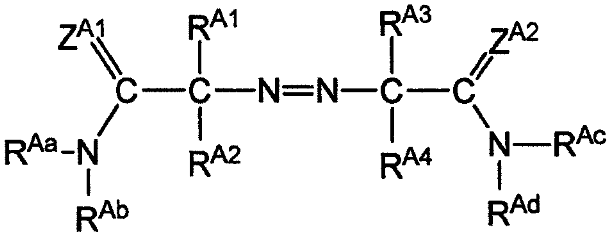

General Formula (AZI)

in General Formula (AZI), each of $Z^{A1}$ and $Z^{A2}$ independently represents =O or =N-$R^{Ae}$, each of $R^{A1}$ to $R^{A4}$ independently represents an alkyl group, each of $R^{Aa}$ to $R^{Ae}$ independently represents a hydrogen atom or an alkyl group, and at least 2 of $R^{Aa}$, $R^{Ab}$, and $R^{Ae}$, at least 2 of $R^{Ac}$, $R^{Ad}$, and $R^{Ae}$, and/or at least 2 of $R^{Aa}$, $R^{Ac}$, and $R^{Ad}$ may be bonded to each other to form a ring,

wherein the content of the radical polymerization initiator is preferably 0.1 parts by mass to 20 parts by mass with respect to 100 parts by mass of the total solid content of the composition.

**12.** The composition for forming an ion exchange film according to any one of claims 7 to 11,
wherein the composition contains a solvent,
wherein the solvent is preferably water or a water-soluble solvent, and
wherein a content of the solvent is preferably 5 parts by mass to 60 parts by mass with respect to 100 parts by mass which is the total mass of the composition.

**13.** A production method for an ion exchange film, comprising:

irradiating the composition for forming an ion exchange film according to any one of claims 7 to 12 with an energy ray; and
crosslinking and curing the composition for forming an ion exchange film,

wherein the crosslinking and curing reaction is preferably performed by the irradiation with an energy ray and heating, and
wherein the heating is preferably performed after the irradiation with an energy ray.

**14.** The production method for an ion exchange film according to claim 13, wherein after the support is coated with the composition and/or the support is impregnated with the composition by using the composition for forming an ion exchange film, the crosslinking and curing reaction is performed.

**15.** A production method for an ion exchange film, comprising:

crosslinking and curing a compound expressed by General Formula (MI-a) below and a compound expressed by General Formula (MI-b) below or a compound expressed by General Formula (MII-a) below and a compound expressed by General Formula (MII-b) below by photoradical polymerization reaction in water or a water-soluble solvent in presence of a photopolymerization initiator,

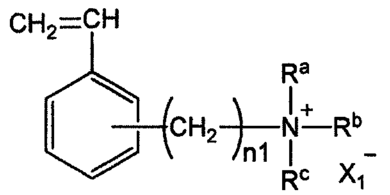

General Formula (MI-a)

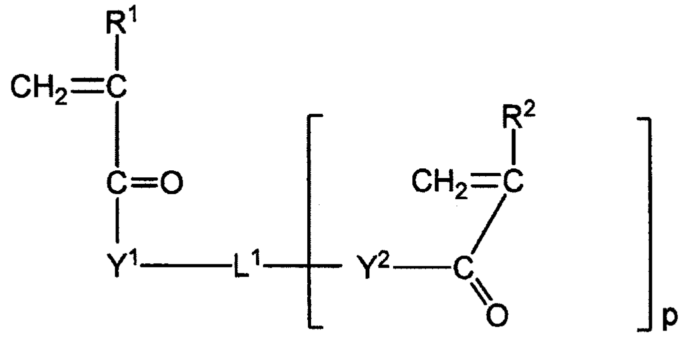

General Formula (MI-b)

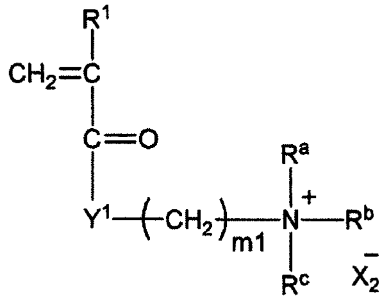

General Formula (MII-a)

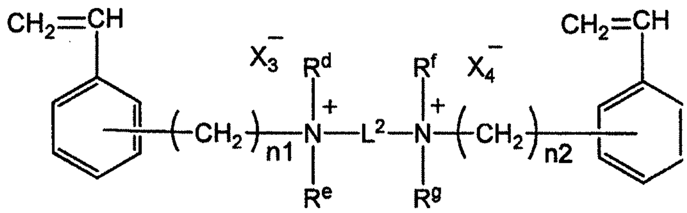

General Formula (MII-b)

in General Formulae (MI-a), (MI-b), (MII-a), and (MII-b), each of $R^1$ and $R^2$ independently represents a hydrogen atom or an alkyl group, each of $Y^1$ and $Y^2$ independently represents -O- or -N(Rx)-, here, Rx represents a hydrogen atom or an alkyl group, $L^1$ represents a p1 + 1-valent linking group having 2 or more carbon atoms, $L^2$ represents a bivalent linking group, p1 represents an integer of 1 or greater, each of n1, n2, and m1 independently represents an integer of 1 or greater, each of $R^a$ to $R^g$ independently represents an alkyl group or an aryl group, 2 or 3 of $R^a$ to $R^c$ may bonded to each other to form a ring, 2 to 4 of $R^d$ to $R^g$ may bonded to each other to form a ring, and each of $X_1^-$ to $X_4^-$ independently represents an organic or inorganic anion.

**Patentansprüche**

1. Ionenaustauschfilm bzw. -folie, umfassend:

   mindestens eine Art von porösen Trägern; und
   ein Polymerharz, das in den Poren des porösen Trägers angeordnet ist,

   worin das Polymerharz ein Styrol-Acryl-Copolymer enthält, das eine Struktur aufweist, die durch mindestens eine der nachstehenden allgemeinen Formeln (PI) und (PII) dargestellt wird:

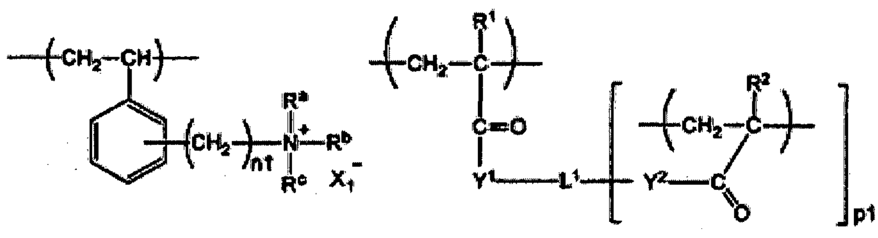

Allgemeine Formel (PI)

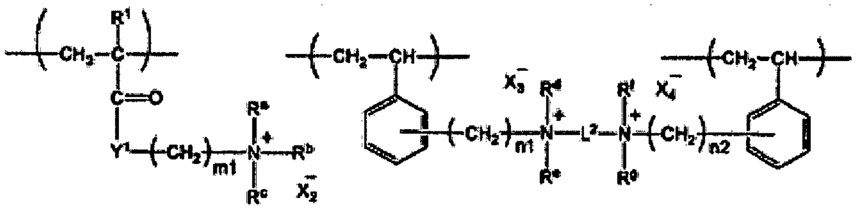

Allgemeine Formel (PII)

wobei in den allgemeinen Formeln (PI) und (PII) jedes von $R^1$ und $R^2$ unabhängig ein Wasserstoffatom oder eine Alkylgruppe darstellt, jedes von $Y^1$ und $Y^2$ unabhängig -O- oder -N(Rx)- darstellt, worin hier Rx ein Wasserstoffatom oder eine Alkylgruppe darstellt, $L^1$ eine p1 + 1-valente Verknüpfungsgruppe mit 2 oder mehr Kohlenstoffatomen darstellt, $L^2$ eine bivalente Verknüpfungsgruppe darstellt, p1 eine ganze Zahl von 1 oder größer darstellt, jedes von n1, n2 und m1 unabhängig eine ganze Zahl von 1 oder größer darstellt, jedes von $R^a$ bis $R^g$ unabhängig eine Alkylgruppe oder eine Arylgruppe darstellt, 2 oder 3 von $R^a$ bis $R^c$ miteinander verbunden sein können, um einen Ring zu bilden, 2 bis 4 von $R^d$ bis $R^g$ miteinander verbunden sein können, um einen Ring zu bilden, und jedes von $X_1$ bis $X_4$ unabhängig ein organisches oder anorganisches Anion darstellt.

**2.** Ionenaustauschfilm bzw. -folie gemäß Anspruch 1,
worin das Polymer aus einer durch die folgende allgemeine Formel (MI-a) dargestellten Monomerkomponente und einer durch die nachstehende allgemeine Formel (MI-b) dargestellten Vernetzungsmonomerkomponente hergestellt ist, oder aus einer durch die nachstehende allgemeine Formel (MII-a) dargestellten Monomerkomponente und einer durch die nachstehende allgemeine Formel (MII-b) dargestellten Vernetzungsmonomerkomponente hergestellt ist

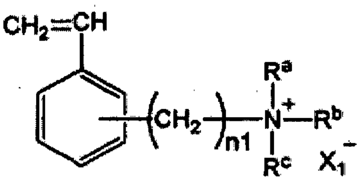

Allgemeine Formel (MI-a)

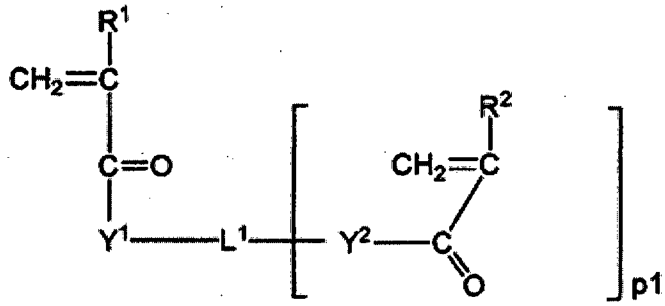

Allgemeine Formel (MI-b)

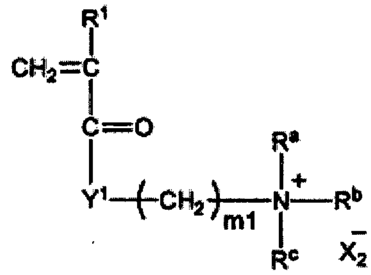

Allgemeine Formel (MII-a)

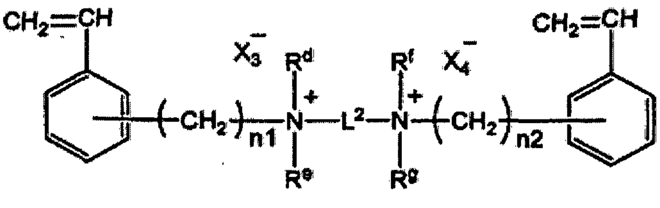

Allgemeine Formel (MII-b)

worin in den allgemeinen Formeln (MI-a), (MI-b), (MII-a) und (MII-b) $R^1$, $R^2$, $Y^1$, $Y^2$, $L^1$, $L^2$, p1, n1, n2, m1, $R^a$ bis $R^g$ und $X_1^-$ bis $X_4^-$ jeweils die gleichen Bedeutungen wie $R^1$, $R^2$, $Y^1$, $Y^2$, $L^1$, $L^2$, p1, n1, n2, m1, $R^a$ bis $R^g$ und $X_1^-$ bis $X_4^-$ in den allgemeinen Formeln (PI) bzw. (PII) besitzen.

**3.** Ionenaustauschfilm bzw. -folie gemäß Anspruch 1 oder 2, worin der Mengenanteil einer Komponente mit einer Struktureinheit, die aus einem Styrolgerüst erhalten wird, oder mit einem Styrolgerüst 1 Masseteil bis 85 Masseteile im Fall der vorstehenden allgemeinen Formel (PI) und 10 Masseteile bis 90 Masseteile im Fall der vorstehenden allgemeinen Formel (PII) beträgt, bezogen auf 100 Masseteile des Polymers.

4. Ionenaustauschfilm bzw. -folie gemäß irgendeinem der Ansprüche 1 bis 3, worin das Polymer durch fotoradikalische Polymerisation vernetzt und gehärtet ist.

5. Ionenaustauschfilm bzw. -folie gemäß irgendeinem der Ansprüche 1 bis 4, worin der poröse Träger ein synthetisches Gewebe, ein synthetischer Vliesstoff, ein schwammförmiger Film oder ein Film mit feinen Durchstoßungslöchern ist, und
worin der poröse Träger bevorzugt ein Polyolefin ist.

6. Ionenaustauschfilm bzw. -folie gemäß irgendeinem der Ansprüche 1 bis 5, worin eine Filmdicke des Polymerharzes 40 μm bis 500 μm beträgt.

7. Zusammensetzung zum Bilden eines Ionenaustauschfilms bzw. einer -folie, umfassend:

eine durch die nachstehend allgemeine Formel (MI-a) dargestellte Verbindung und eine durch die nachstehende allgemeine Formel (MI-b) dargestellte Verbindung; oder
eine durch die nachstehend allgemeine Formel (MII-a) dargestellte Verbindung und eine durch die nachstehende allgemeine Formel (MII-b) dargestellte Verbindung

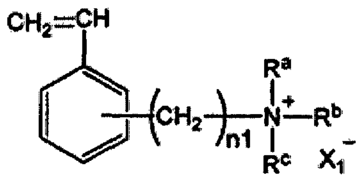

Allgemeine Formel (MI-a)

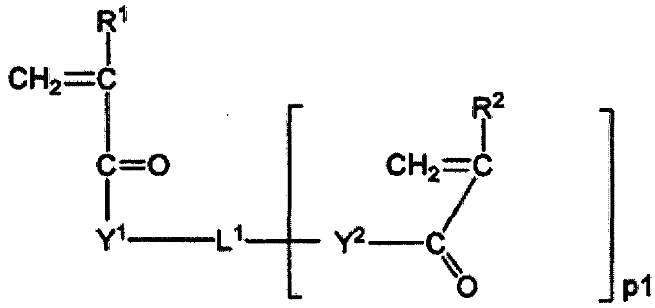

Allgemeine Formel (MI-b)

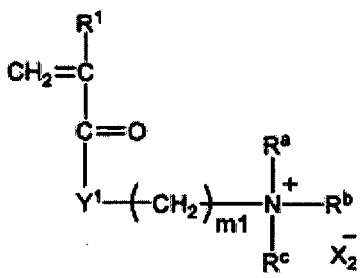

Allgemeine Formel (MII-a)

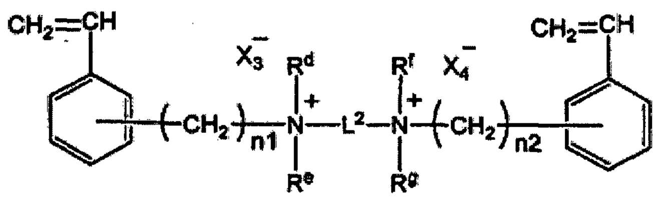

Allgemeine Formel (MII-b)

wobei in den Formeln (MI-a), (MI-b), (MII-a) und (MII-b) jedes von $R^1$ und $R^2$ unabhängig ein Wasserstoffatom oder eine Alkylgruppe darstellt, jedes von $Y^1$ und $Y^2$ unabhängig -O- oder -N(Rx)- darstellt, worin hier Rx ein Wasserstoffatom oder eine Alkylgruppe darstellt, $L^1$ eine p1 + 1-valente Verknüpfungsgruppe mit 2 oder mehr Kohlenstoffatomen darstellt, $L^2$ eine bivalente Verknüpfungsgruppe darstellt, p1 eine ganze Zahl von 1 oder größer darstellt, jedes von n1, n2 und m1 unabhängig eine ganze Zahl von 1 oder größer darstellt, jedes von $R^a$ bis $R^g$ unabhängig eine Alkylgruppe oder eine Arylgruppe darstellt, 2 oder 3 von $R^a$ bis $R^c$ miteinander verbunden sein können, um einen Ring zu bilden, 2 bis 4 von $R^d$ bis $R^g$ miteinander verbunden sein können, um einen Ring zu bilden, und jedes von $X_1^-$ bis $X_4^-$ unabhängig ein organisches oder anorganisches Anion darstellt.

8. Zusammensetzung zum Bilden eines Ionenaustauschfilms bzw. einer -folie gemäß Anspruch 7,
worin der Mengenanteil der Verbindung mit dem Styrolgerüst 1 Masseteil bis 85 Masseteile im Fall der durch die vorstehende allgemeine Formel (MI-a) dargestellten Verbindung und 10 Masseteile bis 90 Masseteile im Fall der

durch die vorstehende allgemeine Formel (MII-a) dargestellten Verbindung beträgt, bezogen auf 100 Masseteile des Gesamtfeststoffgehalts der Zusammensetzung.

**9.** Zusammensetzung zum Bilden eines Ionenaustauschfilms bzw. einer -folie gemäß Anspruch 7 oder 8, worin die Löslichkeit von all den Verbindungen mit den ethylenisch ungesättigten Gruppen 30 Masse-% oder mehr im Hinblick auf reines Wasser bei 25°C beträgt.

**10.** Zusammensetzung zum Bilden eines Ionenaustauschfilms bzw. einer -folie gemäß irgendeinem der Ansprüche 7 bis 9, ferner umfassend:

einen durch die nachstehend allgemeine Formel (PPI-1) oder (PPI-2) dargestellten Fotopolymerisationsinitiator

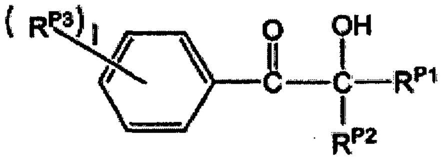

Allgemeine Formel (PPI-1)

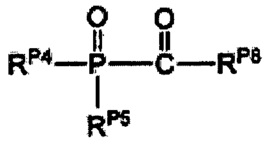

Allgemeine Formel (PPI-2)

worin in den allgemeinen Formeln (PPI-1) und (PPI-2) jedes von $R^{P1}$ und $R^{P2}$ unabhängig ein Wasserstoffatom, eine Alkylgruppe, eine Alkoxygruppe oder einer Aryloxygruppe darstellt, $R^{P3}$ eine Alkylgruppe, eine Alkoxygruppe oder eine Aryloxygruppe darstellt, 1 eine ganze Zahl von 0 bis 5 darstellt, $R^{P4}$ eine Alkylgruppe, eine Arylgruppe, eine Alkylthiogruppe oder eine Arylthiogruppe darstellt, $R^{P5}$ eine Alkylgruppe, eine Arylgruppe, eine Alkylthiogruppe, eine Arylthiogruppe oder eine Acylgruppe darstellt, $R^{P6}$ eine Alkylgruppe oder eine Arylgruppe darstellt und $R^{P1}$ und $R^{P2}$ oder $R^{P4}$ und $R^{P5}$ miteinander verbunden sein können, um einen Ring zu bilden,

worin der Mengenanteil des Fotopolymerisationsinitiators bevorzugt 0,1 Masseteile bis 20 Masseteile, bezogen auf 100 Masseteile des Gesamtfeststoffgehalts der Zusammensetzung beträgt.

**11.** Zusammensetzung zum Bilden eines Ionenaustauschfilms bzw. einer -folie gemäß Anspruch 10, ferner umfassend:

einen durch die nachstehende allgemeine Formel (AZI) dargestellten radikalischen Polymerisationsinitiator

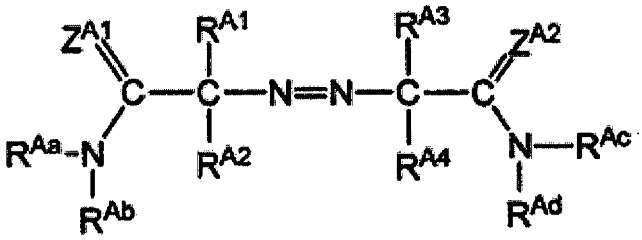

Allgemeine Formel (AZI)

worin in der allgemeinen Formel (AZI) jedes von $Z^{A1}$ und $Z^{A2}$ unabhängig =O oder =N-$R^{Ae}$ darstellt, jedes von $R^{A1}$ bis $R^{A4}$ unabhängig eine Alkylgruppe darstellt, jedes von $R^{Aa}$ bis $R^{Ae}$ unabhängig ein Wasserstoffatom oder eine Alkylgruppe darstellt, und mindestens 2 von $R^{Aa}$, $R^{Ab}$ und $R^{Ae}$, mindestens 2 von $R^{Ac}$, $R^{Ad}$ und $R^{Ae}$ und/oder mindestens zwei von $R^{Aa}$, $R^{Ac}$ und $R^{Ad}$ miteinander verbunden sein können, um einen Ring zu bilden,

worin der Mengenanteil des radikalischen Polymerisationsinitiators bevorzugt 0,1 Masseteile bis 20 Masseteile beträgt, bezogen auf 100 Masseteile des Gesamtfeststoffgehalts der Zusammensetzung.

**12.** Zusammensetzung zum Bilden eines Ionenaustauschfilms bzw. einer -folie gemäß irgendeinem der Ansprüche 7 bis 11,
worin die Zusammensetzung ein Lösungsmittel enthält, worin das Lösungsmittel bevorzugt Wasser oder ein wasserlösliches Lösungsmittel ist und
worin der Mengenanteil des Lösungsmittels bevorzugt 5 Masseteile bis 60 Masseteile in Bezug auf 100 Masseteile beträgt, welche die Gesamtmasse der Zusammensetzung sind.

**13.** Herstellungsverfahren für einen Ionenaustauschfilm bzw. eine -folie, umfassend:

Bestrahlen der Zusammensetzung zum Bilden eines Ionenaustauschfilms bzw. einer -folie gemäß irgendeinem der Ansprüche 7 bis 12 mit Energiestrahlen; und
Vernetzen und Härten der Zusammensetzung zum Bilden eines Ionenaustauschfilms bzw. einer -folie,

worin die Vernetzungs- und Härtungsreaktion bevorzugt durch die Bestrahlung mit Energiestrahlen und Erwärmen durchgeführt wird und
worin das Erwärmen bevorzugt nach der Bestrahlung mit Energiestrahlen durchgeführt wird.

**14.** Herstellungsverfahren für einen Ionenaustauschfilm bzw. eine -folie gemäß Anspruch 13, worin, nachdem der Träger mit der Zusammensetzung beschichtet worden ist und/oder der Träger mit der Zusammensetzung imprägniert worden ist, wobei die Zusammensetzung zum Bilden eines Ionenaustauschfilms bzw. einer -folie verwendet wird, die Vernetzungs- und Härtungsreaktion durchgeführt wird.

**15.** Herstellungsverfahren für einen Ionenaustauschfilm bzw. eine -folie, umfassend:

Vernetzen und Härten einer durch die nachstehende allgemeine Formel (MI-a) dargestellten Verbindung und einer durch die nachstehende allgemeine Formel (MI-b) darstellten Verbindung, oder einer durch die nachstehende allgemeine Formel (MII-a) dargestellten Verbindung und einer durch die nachstehende allgemeine Formel (MII-b) dargestellten Verbindung, durch eine fotoradikalische Polymerisationsreaktion in Wasser oder einem wasserlöslichen Lösungsmittel in der Gegenwart eines Fotopolymerisationsinitiators

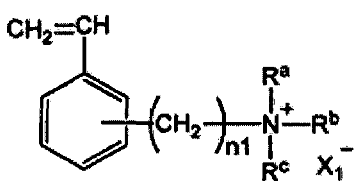

Allgemeine Formel (MI-a)

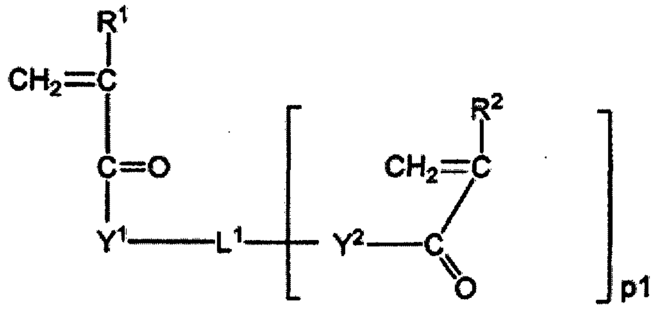

Allgemeine Formel (MI-b)

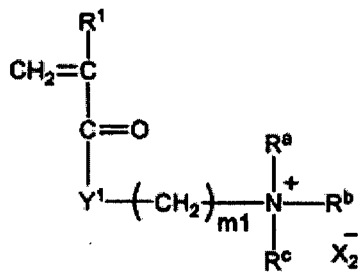

Allgemeine Formel (MII-a)

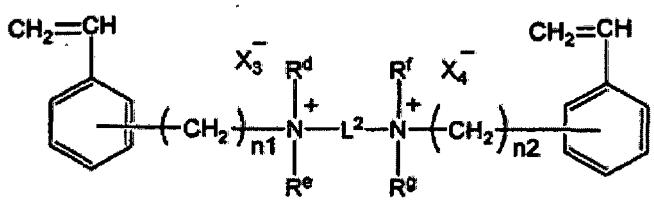

Allgemeine Formel (MII-b)

wobei in den allgemeinen Formeln (MI-a), (MI-b), (MII-a) und (MII-b) jedes von $R^1$ und $R^2$ unabhängig ein Wasserstoffatom oder eine Alkylgruppe darstellt, jedes von $Y^1$ und $Y^2$ unabhängig -O- oder -N(Rx)- darstellt, worin hier Rx ein Wasserstoffatom oder eine Alkylgruppe darstellt, $L^1$ eine p1 + 1-valente Verknüpfungsgruppe mit 2 oder mehr Kohlenstoffatomen darstellt, $L^2$ eine bivalente Verknüpfungsgruppe darstellt, p1 eine ganze Zahl von 1 oder größer darstellt, jedes von n1, n2 und m1 unabhängig eine ganze Zahl von 1 oder größer darstellt, jedes von $R^a$ bis $R^g$ unabhängig eine Alkylgruppe oder eine Arylgruppe darstellt, 2 oder 3 von $R^a$ bis $R^c$ miteinander verbunden sein können, um einen Ring zu bilden, 2 bis 4 von $R^d$ bis $R^g$ miteinander verbunden sein können, um einen Ring zu bilden, und jedes von $X_1$ bis $X_4$ unabhängig ein organisches oder anorganisches Anion darstellt.

## Revendications

**1.** Film d'échange d'ions, comprenant :

au moins un type de supports poreux; et
une résine de polymère disposée dans des pores du support poreux,

dans lequel la résine de polymère contient un copolymère de styrène - acrylique ayant une structure exprimée par au moins une des formules générales (PI) et (PII) ci-dessous,

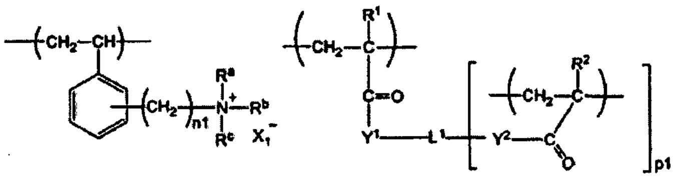

Formule générale (PI)

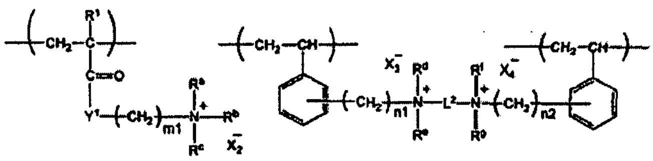

Formule générale (PII)

dans les formules générales (PI) et (PII), chacun de $R^1$ et $R^2$ représente indépendamment un atome d'hydrogène ou un groupe alkyle, chacun de $Y^1$ et $Y^2$ représente indépendamment -O- ou -N(Rx)-, où Rx représente un atome d'hydrogène ou un groupe alkyle, $L^1$ représente un groupe de liaison à valence p1 + 1 ayant 2 atomes de carbone ou plus, $L^2$ représente un groupe de liaison divalent, p1 représente un entier de 1 ou plus, chacun de n1, n2 et m1 représente indépendamment un entier de 1 ou plus, chacun de $R^a$ à $R^g$ représente indépendamment un groupe alkyle ou un groupe aryle, 2 ou 3 de $R^a$ à $R^c$ peuvent être liés les uns aux autres pour former un cycle, 2 à 4 des $R^d$ à $R^g$ peuvent être liés les uns aux autres pour former un cycle, et chacun de $X_1^-$ à $X_4^-$ représente indépendamment un anion organique ou inorganique.

**2.** Film d'échange d'ions selon la revendication 1,
dans lequel le polymère est constitué d'un composant monomère exprimé par la formule générale (MI-a) ci-dessous et d'un composant monomère réticulant exprimé par la formule générale (MI-b) ci-dessous, ou est constitué d'un composant monomère exprimé par la formule générale (MII-a) ci-dessous et d'un composant monomère réticulant exprimé par la formule générale (MII-b) ci-dessous,

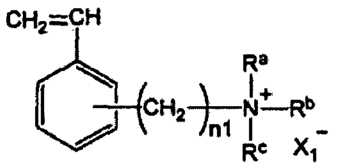

Formule générale (MI-a)

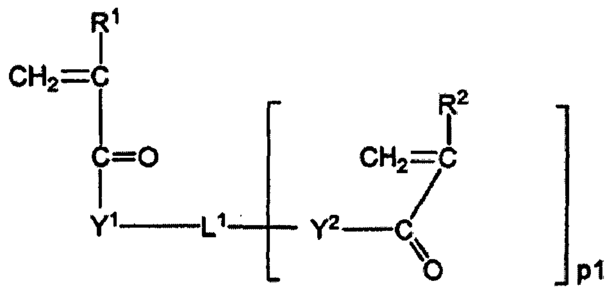

Formule générale (MI-b)

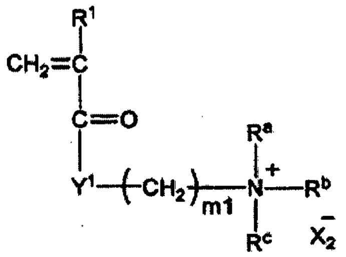

Formule générale (MII-a)

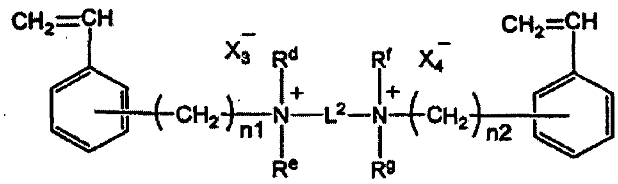

Formule générale (MII-b)

dans les formules générales (MI-a), (MI-b), (MII-a) et (MII-b), $R^1$, $R^2$, $Y^1$, $Y^2$, $L^1$, $L^2$, p1, n1, n2, m1, $R^a$ à $R^g$, et $X_1^-$ à $X_4^-$ ont la même signification que $R^1$, $R^2$, $Y^1$, $Y^2$, $L^1$, $L^2$, p1, n1, n2, m1, $R^a$ à $R^g$, et $X_1^-$ à $X_4^-$ dans les formules générales (PI) et (PII), respectivement.

**3.** Film d'échange d'ions selon la revendication 1 ou 2,
dans lequel une teneur en un composant ayant une unité structurelle obtenue à partir d'un squelette de styrène ou ayant un squelette de styrène est de 1 partie en masse à 85 parties en masse dans le cas de la formule générale (PI) ci-dessus, et de 10 parties en masse à 90 parties en masse dans le cas de la formule générale (PII) ci-dessus, par rapport à 100 parties en masse du polymère.

**4.** Film d'échange d'ions selon l'une quelconque des revendications 1 à 3, dans lequel le polymère est réticulé et durci par polymérisation photoradicalaire.

**5.** Film d'échange d'ions selon l'une quelconque des revendications 1 à 4,
dans lequel le support poreux est un textile tissé synthétique, un textile non tissé synthétique, un film en forme d'éponge, ou un film ayant de fins trous de passage, et
dans lequel le support poreux est de préférence de la polyoléfine.

**6.** Film d'échange d'ions selon l'une quelconque des revendications 1 à 5, dans lequel une épaisseur de film de la résine de polymère est de 40 μm à 500 μm.

**7.** Composition pour la formation d'un film d'échange d'ions, comprenant :

un composé exprimé par la formule générale (MI-a) ci-dessous et un composé exprimé par la formule générale (MI-b) ci-dessous; ou
un composé exprimé par la formule générale (MII-a) ci-dessous et un composé exprimé par la formule générale (MII-b) ci-dessous,

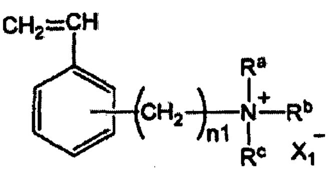

Formule générale (MI-a)

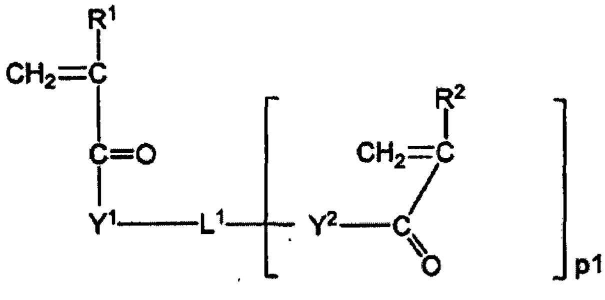

Formule générale (MI-b)

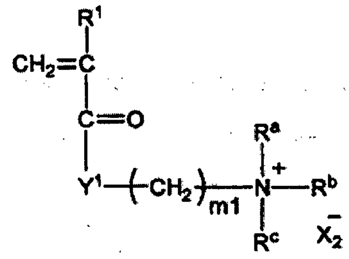

Formule générale (MII-a)

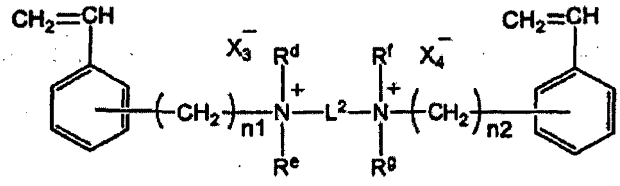

Formule générale (MII-b)

dans les formules générales (MI-a), (MI-b), (MII-a) et (MII-b), chacun de $R^1$ et $R^2$ représente indépendamment un atome d'hydrogène ou un groupe alkyle, chacun de $Y^1$ et $Y^2$ représente indépendamment -O- ou -N(Rx)-, où Rx représente un atome d'hydrogène ou un groupe alkyle, $L^1$ représente un groupe de liaison à valence p1 + 1 ayant 2 atomes de carbone ou plus, $L^2$ représente un groupe de liaison divalent, p1 représente un entier de 1 ou plus, chacun de n1, n2 et m1 représente indépendamment un entier de 1 ou plus, chacun de $R^a$ à $R^g$ représente indépendamment un groupe alkyle ou un groupe aryle, 2 ou 3 de $R^a$ à $R^c$ peuvent être liés les uns aux autres pour former un cycle, 2 à 4 de $R^d$ à $R^g$ peuvent être liés les uns aux autres pour former un cycle, et chacun de $X_1^-$ à $X_4^-$ représente indépendamment un anion organique ou inorganique.

**8.** Composition pour la formation d'un film d'échange d'ions selon la revendication 7,
dans laquelle une teneur en le composé ayant un squelette de styrène est de 1 partie en masse à 85 parties en masse dans le cas du composé exprimé par la formule générale (MI-a) ci-dessus, et de 10 parties en masse à 90 parties en masse dans le cas du composé exprimé par la formule générale (MII-a) ci-dessus, par rapport à 100 parties en masse de la teneur totale en solides de la composition.

**9.** Composition pour la formation d'un film d'échange d'ions selon la revendication 7 ou 8,
dans laquelle une solubilité de tous les composés ayant les groupes insaturés éthyléniquement est de 30 % en masse ou plus par rapport à une eau pure à 25 °C.

**10.** Composition pour la formation d'un film d'échange d'ions selon l'une quelconque des revendications 7 à 9, comprenant en outre :

un initiateur de photopolymérisation exprimé par la formule générale (PPI-1) ou (PPI-2) ci-dessous,

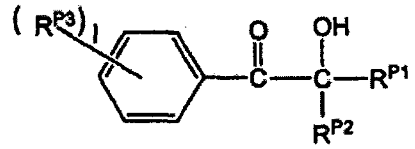

Formule générale (PPI-1)

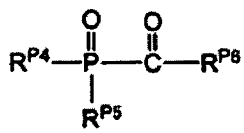

Formule générale (PPI-2)

dans les formules générales (PPI-1) et (PPI-2), chacun de $R^{P1}$ et $R^{P2}$ représente indépendamment un atome d'hydrogène, un groupe alkyle, un groupe alcoxy, ou un groupe aryloxy, $R^{P3}$ représente un groupe alkyle, un groupe alcoxy, ou un groupe aryloxy, l représente un entier de 0 à 5, $R^{P4}$ représente un groupe alkyle, un groupe aryle, un groupe alkylthio, ou un groupe arylthio, $R^{P5}$ représente un groupe alkyle, un groupe aryle, un groupe alkylthio, un groupe arylthio, ou un groupe acyle, $R^{P6}$ représente un groupe alkyle ou un groupe aryle, et $R^{P1}$ et $R^{P2}$ ou $R^{P4}$ et $R^{P5}$ peuvent être liés l'un à l'autre pour former un cycle,
dans laquelle une teneur en l'initiateur de photopolymérisation est de préférence de 0,1 partie en masse à 20 parties en masse par rapport à 100 parties en masse de la teneur totale en solides de la composition.

**11.** Composition pour la formation d'un film d'échange d'ions selon la revendication 10, comprenant en outre :

un initiateur de polymérisation radicalaire exprimé par la formule générale (AZI) ci-dessous,

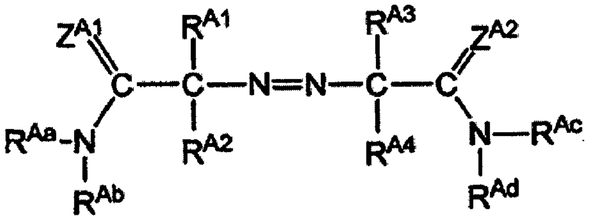

Formule générale (AZI)

dans la formule générale (AZI), chacun de $Z^{A1}$ et $Z^{A2}$ représente indépendamment =O ou =N-$R^{Ae}$, chacun de $R^{A1}$ à $R^{A4}$ représente, indépendamment un groupe alkyle, chacun de $R^{Aa}$ à $R^{Ae}$ représente indépendamment un atome d'hydrogène ou un groupe alkyle, et au moins 2 de $R^{Aa}$, $R^{Ab}$ et $R^{Ae}$, au moins 2 de $R^{Ac}$, $R^{Ad}$ et $R^{Ae}$, et/ou au moins 2 de $R^{Aa}$, $R^{Ac}$ et $R^{Ad}$ peuvent être liés les uns aux autres pour former un cycle,
dans laquelle la teneur en l'initiateur de polymérisation radicalaire est de préférence de 0,1 partie en masse à 20 parties en masse par rapport à 100 parties en masse de la teneur totale en solides de la composition.

**12.** Composition pour la formation d'un film d'échange d'ions selon l'une quelconque des revendications 7 à 11, dans laquelle la composition contient un solvant,
dans laquelle le solvant est de préférence de l'eau ou un solvant hydrosoluble, et dans laquelle une teneur en solvant est de préférence de 5 parties en masse à 60 parties en masse par rapport à 100 parties en masse, qui est la masse totale de la composition.

**13.** Procédé de production pour un film d'échange d'ions, comprenant :

l'irradiation de la composition pour la formation d'un film d'échange d'ions selon l'une quelconque des revendications 7 à 12 avec un rayon d'énergie ; et
la réticulation et le durcissement de la composition pour la formation d'un film d'échange d'ions,

dans lequel la réaction de réticulation et de durcissement est de préférence réalisée par l'irradiation avec un rayon d'énergie et par chauffage, et
dans lequel le chauffage est de préférence réalisé après l'irradiation avec un rayon d'énergie.

**14.** Procédé de production pour un film d'échange d'ions selon la revendication 13, dans lequel, après que le support soit revêtu avec la composition et/ou que le support soit imprégné avec la composition en utilisant la composition pour la formation d'un film d'échange d'ions, la réaction de réticulation et de durcissement est réalisée.

**15.** Procédé de production pour un film d'échange d'ions, comprenant :

la réticulation et le durcissement d'un composé exprimé par la formule générale (MI-a) ci-dessous et d'un composé exprimé par la formule générale (MI-b) ci-dessous ou d'un composé exprimé par la formule générale (MII-a) ci-dessous et d'un composé exprimé par la formule générale (MII-b) ci-dessous par une réaction de polymérisation photoradicalaire dans de l'eau ou dans un solvant hydrosoluble en présence d'un initiateur de photopolymérisation,

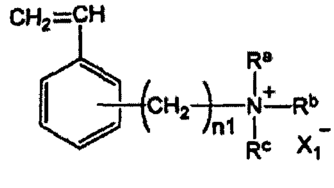

Formule générale (MI-a)

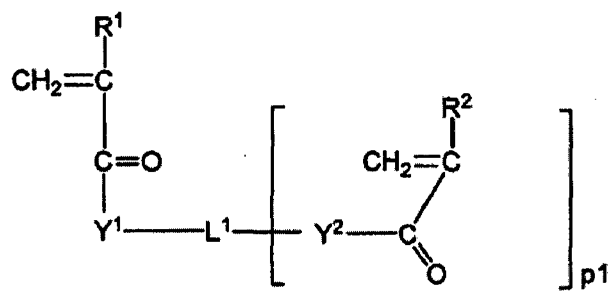

Formule générale (MI-b)

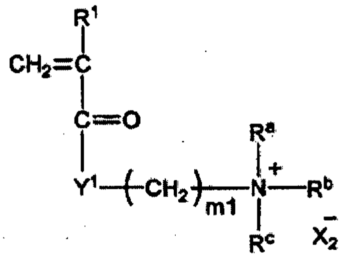

Formule générale (MII-a)

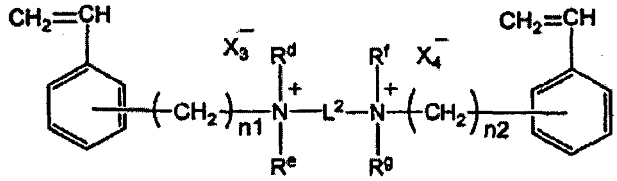

Formule générale (MII-b)

dans les formules générales (MI-a), (MI-b), (MII-a) et (MII-b), chacun de $R^1$ et $R^2$ représente indépendamment un atome d'hydrogène ou un groupe alkyle, chacun de $Y^1$ et $Y^2$ représente indépendamment -O- ou -N(Rx)-, où Rx représente un atome d'hydrogène ou un groupe alkyle, $L^1$ représente un groupe de liaison à valence p1 + 1 ayant 2 atomes de carbone ou plus, $L^2$ représente un groupe de liaison divalent, p1 représente un entier de 1 ou plus, chacun de n1, n2 et m1 représente indépendamment un entier de 1 ou plus, chacun de $R^a$ à $R^g$ représente indépendamment un groupe alkyle ou un groupe aryle, 2 ou 3 de $R^a$ à $R^c$ peuvent être liés les uns aux autres pour former un cycle, 2 à 4 de $R^d$ à $R^g$ peuvent être liés les uns aux autres pour former un cycle, et chacun de $X_1^-$ à $X_4^-$ représente indépendamment un anion organique ou inorganique.

FIG. 1

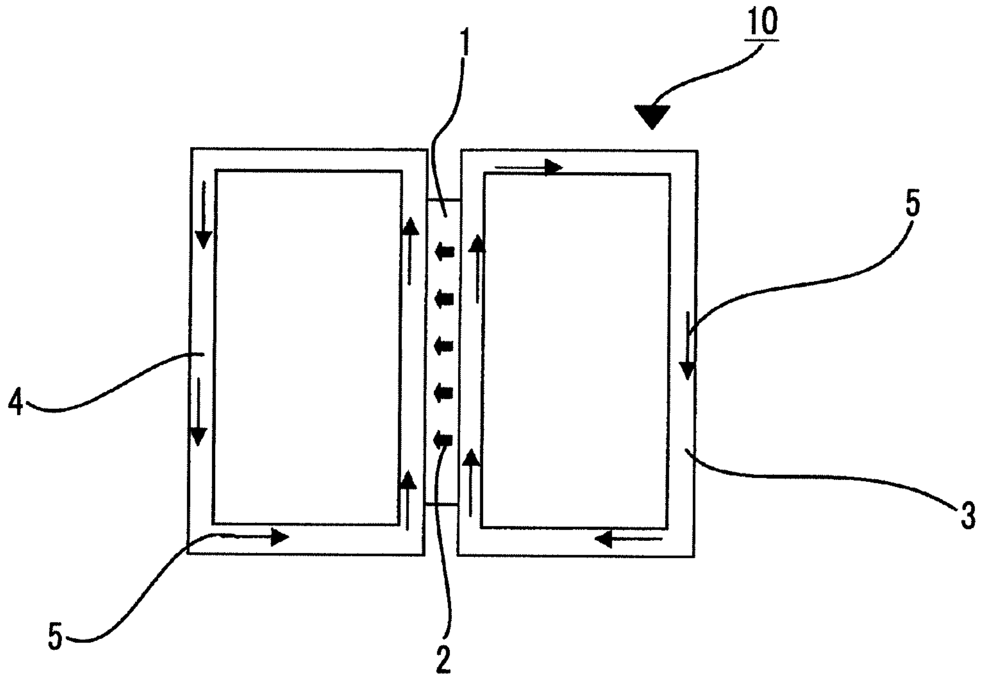

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2000212306 A
- JP 6073206 A
- JP H06073206 A
- WO 2013011273 A
- WO 2011073638 A
- JP 2013513623 A
- JP 2000229917 A
- JP 2012206992 A
- JP H0673206 A


### Non-patent literature cited in the description


- **NAKAGAKI MASAYUKI.** *Membrane Science,* 2008, vol. 319, 217-218
- *a hymenology experimental method,* 1984, 193-195